(19) Europäisches Patentamt
European Patent Office
Office européen des brevets

(11) **EP 4 730 282 A1**

(12) **EUROPEAN PATENT APPLICATION**

(43) Date of publication:
**22.04.2026 Bulletin 2026/17**

(21) Application number: **25198971.1**

(22) Date of filing: **29.08.2025**

(51) International Patent Classification (IPC):
**G06V 40/10** (2022.01)     **G06V 40/20** (2022.01)
**G06V 10/422** (2022.01)     **G06V 10/82** (2022.01)

(52) Cooperative Patent Classification (CPC):
**G06V 10/82; G06V 10/422; G06V 40/107;**
**G06V 40/28;** G06V 10/255; G06V 10/809;
G06V 20/41

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **29.08.2024 SG 10202402674S**
**10.12.2024 GB 202418093**

(71) Applicants:
• **AUMOVIO Germany GmbH**
**60488 Frankfurt am Main (DE)**
• **Nanyang Technological University**
**Singapore 639798 (SG)**

(72) Inventors:
• **Li, Yiming**
**639798 Singapore (SG)**
• **Yap, Kim Hui**
**639798 Singapore (SG)**
• **Wang, Wenqian**
**639798 Singapore (SG)**
• **Li, BingBing**
**339780 Singapore (SG)**

(74) Representative: **Aumovio Corporation**
**AUMOVIO Germany GmbH**
**Taunusstraße 36**
**80807 München (DE)**

(54) **ORA: OBJECT-AUGMENTED RELATION-AWARE ACTION RECOGNITION**

(57)     A computer-implemented method of object-augmented action recognition and an object-augmented action recognition system may be provided, the method comprises processing one or more initial patch tokens to extract one or more human tokens and one or more object tokens; applying the extracted one or more human tokens and the extracted one or more object tokens and the one or more initial patch tokens to a first cross attention mechanism to obtain a set of processed patch tokens containing object-guided information; enumerating to construct a set of Human-Object (HO) tokens, the constructed HO tokens each comprising information associated with visual relationship and information associated with spatial relationship between a human token and an object token; applying the constructed HO tokens and the processed patch tokens containing object-guided information to a second cross attention mechanism to obtain a set of resultant processed HO tokens; applying a feature aggregation process to the resultant processed HO tokens to synthesize the features of M groups of the resultant processed HO tokens into a single feature representation; obtaining a prediction result based on the set of processed patch tokens containing object-guided information; obtaining an action recognition prediction result based on a result of the feature aggregation process and the prediction result based on the set of processed patch tokens containing object-guided information; and outputting for use the action recognition prediction result.

FIG. 2

EP 4 730 282 A1

**Description**

**TECHNICAL FIELD**

The present disclosure relates broadly to an object-augmented action recognition system and a method of object-augmented action recognition.

**BACKGROUND**

With the development of deep learning technology and the proliferation of video datasets, the field of video-based action recognition/determination has improved. Conventionally, recognition methods typically focused on analysing global visual features or human postures to identify actions of one or more humans from video frames. However, it has since been recognised that supplementary information can be incorporated to enrich the contextual understanding of actions. For example, objects present in video frames can provide significant clues/information, providing additional attention information that can significantly improve the accuracy of action recognition/determination.

Some studies have investigated the effectiveness of introducing objects into action recognition models. These studies are such as J. Materzynska et al., Something-else: Compositional action recognition with spatial-temporal interaction networks, in: Proceedings of the IEEE/CVF conference on computer vision and pattern recognition, 2020, pp. 1049-1059; G. Radevski et al., Revisiting spatiotemporal layouts for compositional action recognition, arXiv preprint arXiv:2111.01936 (2021); R. Herzig et al., Object-region video transformers, in: Proceedings of the ieee/cvf conference on computer vision and pattern recognition, 2022, pp. 3148-3159; C. Zhang et al., Is an object-centric video representation beneficial for transfer?, in: Proceedings of the Asian Conference on Computer Vision, 2022, pp. 1976-1994; and X. Zhou et al., How can objects help action recognition?, in: Proceedings of the IEEE/CVF Conference on Computer Vision and Pattern Recognition, 2023, pp. 2353-2362.

Other studies attempt to integrate object information into action-related tasks, such as action recognition and action detection. These studies are such as G. Elsayed et al., Savi++: Towards end-to-end object-centric learning from real-world videos, Advances in Neural Information Processing Systems 35 (2022) 28940-28954; F. Locatello et al., Object-centric learning with slot attention, Advances in neural information processing systems 33 (2020) 11525-11538; A. Shamsian et al., Learning object permanence from video, in: Computer Vision-ECCV 2020: 16th European Conference, Glasgow, UK, August 23-28, 2020, Proceedings, Part XVI 16, Springer, 2020, pp. 35-50; C.-Y. Wu et al., Towards long-form video understanding, in: Proceedings of the IEEE/CVF Conference on Computer Vision and Pattern Recognition, 2021, pp. 1884-1894; and X. Wang et al., Videos as space-time region graphs, in: Proceedings of the European conference on computer vision (ECCV), 2018, pp. 399- 417.

However, from such existing studies, a critical analysis of such existing models reveals a problem or a common shortcoming which is a lack of consideration of the complex interactions between objects and humans in a scene and/or of the relationship between certain objects and actions.

The inventors recognise that the lack of consideration discussed above typically leads to the introduction of action-irrelevant information or injection of unrelated object information, thus compromising the results of feature extraction and the overall model performance.

For current neighbouring technologies e.g. determining interactions rather than action recognition, the Human Object Interaction (HOI) task is typically studied as a traditional computer vision (CV) task. With the development of the Transformer model in the context of deep learning, HOI detection methods are typically and generally classified into two main categories which are a two-stage approach and a one-stage approach.

One-stage HOI detection methods are typically known for their efficiency and simplicity. These methods directly predict interaction triples, typically bypassing relatively more complex post-processing steps utilised by two-stage methods. One-stage methods initially focused on either predicting interactions as sets of key points or detecting interaction regions through anchor boxes. Such initial approaches sought to directly capture the interaction nuances but faced challenges such as semantic ambiguity and occlusion sensitivity. One-stage methods also included end-to-end transformer-based methods that may leverage the self-attention mechanism to model complex relationships between entities within an image comprehensively. Such methods may integrate human-object pair detection with interaction classification into a unified framework and may improve context capture and reducing the impact of unrelated instances. The inventors recognise that use of transformers may allow for a more nuanced understanding of interactions.

On the other hand, for a typical two-stage method of HOI detection, potential Human-Object (HO) pairs are detected and their interactions are then analysed. Such an approach typically involves cropping one or more humans and objects from bounding boxes and extracting features, such as appearance, spatial configuration and pose, to predict interactions between pairs.

Typically, the first stage of a two-stage method uses object detection models to identify objects and humans within an image. Pre-trained models on datasets such as MS-COCO (as taught in T.-Y. Lin et al., Microsoft coco: Common objects in context, in: Computer Vision-ECCV 2014: 13th European Conference, Zurich, Switzerland, September 6-12, 2014, Proceedings, Part V 13, Springer, 2014, pp. 740-755) and fine-tuning on HOI-specific datasets such as HICO-DET (as taught in Y.-W. Chao et al., Hico: A benchmark for recognizing human-object interactions in images, in: Proceedings of the IEEE international conference on computer vision, 2015, pp. 1017-1025) are used to improve detection accuracy.

For the second stage, typically, the interaction type is predicted by analyzing extracted features, including appearance, spatial positions, pose, and semantic information. This is taught e.g. in S. Qi et al., Learning human-object interactions by graph parsing neural networks, in: Proceedings of the European conference on computer vision (ECCV), 2018, pp. 401-417.

With advancement in feature extraction techniques such as the use of Convoluted Neural Networks (CNNs) like ResNet (as taught in K. He et al., Deep residual learning for image recognition, in: Proceedings of the IEEE conference on computer vision and pattern recognition, 2016, pp. 770-778) and Deformable ConvNet (as taught in J. Dai et al., Deformable convolutional networks, in: Proceedings of the IEEE international conference on computer vision, 2017, pp. 764-773), the second stage may be improved and different feature types may be explored to more accurately predict interactions. In other studies, graph networks are introduced to capture high-level structures and relationships in video scenes. These graph networks can vary from visual graphs that associate appearance features to semantic graphs that rely on word embeddings, and to combined visual graphs that include both visual graphs and semantic cues.

Even further, other studies have attempted to incorporate transformer based models in the two-stage approach/-framework. PViC, as taught in F. Z. Zhang et al., Exploring predicate visual context in detecting of human-object interactions, in: Proceedings of the IEEE/CVF International Conference on Computer Vision, 2023, pp. 10411-10421, addresses some limitations of traditional two-stage methods by enhancing the predicate visual context through improved query design and the integration of box pair positional embeddings for spatial guidance. GEN-VLKT, as taught in Y. Liao et al., Gen-vlkt: Simplify association and enhance interaction understanding for hoi detection, in: Proceedings of the IEEE/CVF Conference on Computer Vision and Pattern Recognition, 2022, pp. 20123-20132, tackles some drawbacks of conventional query-driven detectors by introducing a Guided-Embedding Network that may simplify the human-object association and may enhance interaction understanding through Visual-Linguistic Knowledge Transfer from pre-trained models like CLIP (as taught in A. Radford et al., Learning transferable visual models from natural language supervision, in: International conference on machine learning, PMLR, 2021, pp. 8748-8763). ViPLO, as taught in J. Park et al., Viplo: Vision transformer based poseconditioned self-loop graph for human-object interaction detection, in: Proceedings of the IEEE/CVF Conference on Computer Vision and Pattern Recognition, 2023, pp. 17152-17162, may integrate a Vision Transformer backbone with a Pose Conditioned Self-Loop Graph, and may emphasize the human perception process in HOI detection and may achieve state-of-the-art results on public benchmarks.

However, the inventors recognise that the two-stage approaches in current technology cannot be adopted in action recognition tasks due to a lack of interaction-level annotations.

Hence, there exists a need for an object-augmented action recognition system and a method of object-augmented action recognition that seek to address at least one of the above problems.

## SUMMARY

In accordance with an aspect of the present disclosure, there is provided a computer-implemented method of object-augmented action recognition, the method comprising obtaining one or more initial patch tokens from one or more video frames; processing the one or more initial patch tokens to extract one or more human tokens and one or more object tokens; applying the extracted one or more human tokens and the extracted one or more object tokens and the one or more initial patch tokens to a first cross attention mechanism to obtain a set of processed patch tokens containing object-guided information; enumerating the extracted one or more human tokens and the extracted one or more object tokens to construct a set of Human-Object (HO) tokens, the constructed HO tokens each comprising information associated with visual relationship and information associated with spatial relationship between a human token and an object token; applying the constructed HO tokens and the processed patch tokens containing object-guided information to a second cross attention mechanism to obtain a set of resultant processed HO tokens; applying a feature aggregation process to the resultant processed HO tokens to synthesize the features of M groups of the resultant processed HO tokens into a single feature representation; obtaining a prediction result based on the set of processed patch tokens containing object-guided information; obtaining an action recognition prediction result based on a result of the feature aggregation process and the prediction result based on the set of processed patch tokens containing object-guided information; and outputting for use the action recognition prediction result.

The step of processing the one or more initial patch tokens to extract one or more human tokens and one or more object tokens may comprise using object metadata information to extract the one or more human tokens and the one or more object tokens, the object metadata information based on applying bounding box coordinates and object categories from object annotation data to the one or more video frames.

The step of processing the one or more initial patch tokens to extract one or more human tokens and one or more object tokens may further comprise ordering the extracted one or more human tokens and the extracted one or more object tokens to place the one or more human tokens in front of the one or more object tokens.

The step of enumerating the extracted one or more human tokens and the extracted one or more object tokens to construct a set of HO tokens may further comprise embedding information associated with visual relationship using a concatenation process and a positional encoding process.

The step of enumerating the extracted one or more human tokens and the extracted one or more object tokens to construct a set of HO tokens may further comprise embedding information associated with spatial relationship using spatial embedding data and another concatenation process.

The step of applying a feature aggregation process may comprise combining different resultant processed HO tokens into the M groups, wherein each group represents action-level features trained using action annotations; and aggregating the resultant processed HO tokens using a weight applied for each resultant processed HO token.

The step of applying a feature aggregation process to the resultant processed HO tokens may further comprise a selection of the most decisive resultant processed HO tokens for action recognition.

The step of outputting for use the action recognition prediction result may comprise transmitting the action recognition prediction result to an action apparatus; and causing the action apparatus to activate an action based on the action recognition prediction result.

In accordance with another aspect of the present disclosure, there is provided an object-augmented action recognition system, the system comprising an input module to obtain one or more initial patch tokens from one or more video frames; an Object-augmented Relation-aware Action recognition (ORA) module coupled to the input module, the ORA module comprising an Object-Guided Attention (OGA) module to process the one or more initial patch tokens to extract one or more human tokens and one or more object tokens, the OGA module further to apply the extracted one or more human tokens and the extracted one or more object tokens and the one or more initial patch tokens to a first cross attention mechanism to obtain a set of processed patch tokens containing object-guided information; a Dynamic Interaction Attention (DIA) module coupled to the OGA module, the DIA module to enumerate the extracted one or more human tokens and the extracted one or more object tokens to construct a set of Human-Object (HO) tokens, the constructed HO tokens each comprising information associated with visual relationship and information associated with spatial relationship between a human token and an object token, the DIA module further to apply the constructed HO tokens and the processed patch tokens containing object-guided information to a second cross attention mechanism to obtain a set of resultant processed HO tokens; a feature aggregation module to apply a feature aggregation process to the resultant processed HO tokens to synthesize the features of M groups of the resultant processed HO tokens into a single feature representation; a classification head to obtain a prediction result based on the set of processed patch tokens containing object-guided information; a prediction module to obtain an action recognition prediction result based on a result of the feature aggregation process and the prediction result based on the set of processed patch tokens containing object-guided information; and the prediction module further to output for use the action recognition prediction result; an action apparatus coupled to the ORA module, the action apparatus arranged to activate an action based on the action recognition prediction result.

The object-augmented action recognition system may further comprise the OGA module further to use object metadata information to extract the one or more human tokens and the one or more object tokens, the object metadata information based on the OGA module arranged to apply bounding box coordinates and object categories from object annotation data to the one or more video frames.

The object-augmented action recognition system may further comprise the OGA module further to order the extracted one or more human tokens and the extracted one or more object tokens to place the one or more human tokens in front of the one or more object tokens.

The object-augmented action recognition system may further comprise the DIA module to embed information associated with visual relationship using a concatenation process and a positional encoding process.

The object-augmented action recognition system may further comprise the DIA module to embed information associated with spatial relationship using spatial embedding data and another concatenation process.

The object-augmented action recognition system may further comprise the feature aggregation module to combine different resultant processed HO tokens into the M groups, wherein each group represents action-level features trained using action annotations; and to aggregate the resultant processed HO tokens using a weight applied for each resultant processed HO token.

The object-augmented action recognition system may further comprise the feature aggregation module to perform a selection of the most decisive resultant processed HO tokens for action recognition.

The object-augmented action recognition system may further comprise the prediction module to transmit the action recognition prediction result to the action apparatus; and to cause the action apparatus to activate the action based on the action recognition prediction result.

In accordance with another aspect of the present disclosure, there is provided a non-transitory tangible computer readable storage medium having stored thereon software instructions that, when executed by a computer processor of an object-augmented action recognition system, cause the computer processor to perform a computer-implemented method of object-augmented action recognition, by executing the steps comprising obtaining one or more initial patch tokens from one or more video frames; processing the one or more initial patch tokens to extract one or more human tokens and one or more object tokens; applying the extracted one or more human tokens and the extracted one or more object tokens and the one or more initial patch tokens to a first cross attention mechanism to obtain a set of processed patch tokens containing object-guided information; enumerating the extracted one or more human tokens and the extracted one or more object tokens to construct a set of Human-Object (HO) tokens, the constructed HO tokens each comprising information associated with visual relationship and information associated with spatial relationship between a human token and an object token; applying the constructed HO tokens and the processed patch tokens containing object-guided information to a second cross attention mechanism to obtain a set of resultant processed HO tokens; applying a feature aggregation process to the resultant processed HO tokens to synthesize the features of M groups of the resultant processed HO tokens into a single feature representation; obtaining a prediction result based on the set of processed patch tokens containing object-guided information; obtaining an action recognition prediction result based on a result of the feature aggregation process and the prediction result based on the set of processed patch tokens containing object-guided information; and outputting for use the action recognition prediction result.

The computer-implemented method of object-augmented action recognition may be as described in the preceding aspect and statements.

## BRIEF DESCRIPTION OF THE DRAWINGS

Exemplary embodiments of the present disclosure will be better understood and readily apparent to one of ordinary skill in the art from the following written description, by way of example only, and in conjunction with the drawings, in which:

FIG. 1 is a schematic block diagram for illustrating an object-augmented action recognition system in an exemplary embodiment.

FIG. 2 is a schematic block diagram for illustrating a computer-implemented method of object-augmented relation-aware action recognition in an exemplary embodiment.

FIG. 3 is a schematic diagram for illustrating a sub-system for construction of Human-Object (HO) tokens in the exemplary embodiment.

FIG. 4A is a schematic drawing illustrating a typical Transformer model structure.

FIG. 4B is a schematic drawing illustrating an example Transformer model structure in an exemplary embodiment.

FIG. 5 is a schematic block diagram for illustrating a method of object-augmented action recognition in an exemplary embodiment.

FIG. 6 is a schematic drawing of a computer system suitable for implementing an exemplary embodiment.

## DETAILED DESCRIPTION

Exemplary embodiments may provide an object-augmented action recognition system and a method of object-augmented action recognition. In exemplary embodiments, action recognition may be enhanced by one or more processes to provide information relating objects to augment action recognition and/or to provide information relating to relation between an object and a human to augment action recognition.

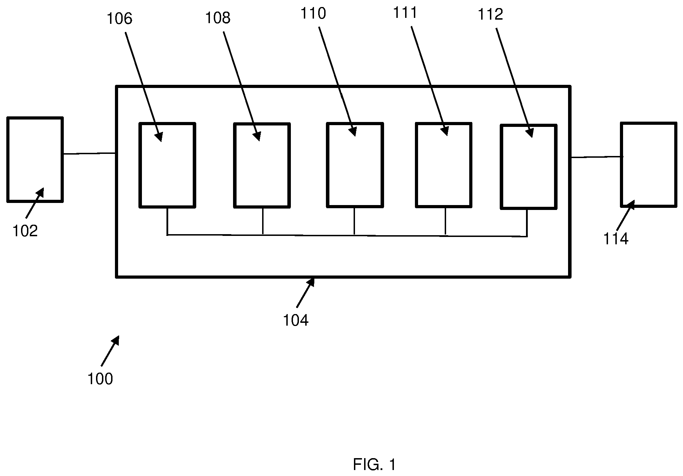

FIG. 1 is a schematic block diagram for illustrating an object-augmented action recognition system 100 in an exemplary embodiment. The system 100 comprises an input module 102 that is arranged/configured to obtain one or more initial patch tokens from one or more video frames. The system 100 further comprises an Object-augmented Relation-aware Action recognition (ORA) module 104 coupled to the input module 102.

In the exemplary embodiment, the ORA module 104 comprises an Object-Guided Attention (OGA) module 106 that is arranged/configured to process the one or more initial patch tokens to extract one or more human tokens and one or more object tokens. The OGA module 106 is further arranged/configured to apply the extracted one or more human tokens and the extracted one or more object tokens and the one or more initial patch tokens to a first cross attention mechanism to obtain a set of processed patch tokens containing object-guided information. The ORA module 104 also comprises a Dynamic Interaction Attention (DIA) module 108 coupled to the OGA module 106 and the DIA module 108 is arranged/-

configured to enumerate the extracted one or more human tokens and the extracted one or more object tokens to construct a set of HO tokens, the constructed HO tokens each comprising information associated with visual relationship and information associated with spatial relationship between a human token and an object token. The DIA module 108 is further arranged/configured to apply the constructed HO tokens and the processed patch tokens containing object-guided information to a second cross attention mechanism to obtain a set of resultant processed/updated HO tokens.

The ORA module 104 further comprises a feature aggregation module 110 that is arranged/configured to apply a feature aggregation process to the resultant processed HO tokens to synthesize the features of M groups of the resultant processed HO tokens into a single feature representation. The ORA module 104 further comprises a classification head or a classification head module 111 that is arranged/configured to obtain a prediction result based on the set of processed patch tokens containing object-guided information. The ORA module 104 also comprises a prediction module 112 that is arranged/configured to obtain an action recognition prediction result based on a result of the feature aggregation process and the prediction result based on the set of processed patch tokens containing object-guided information. The prediction module 112 is further arranged/configured to output for use the action recognition prediction result.

In the exemplary embodiment, the system 100 further comprises an action apparatus 114 coupled to the ORA module 104. The action apparatus 114 is arranged/configured to activate an action based on the action recognition prediction result.

In the exemplary embodiment, the OGA module 106 may be further arranged/configured to use object metadata information to extract the one or more human tokens and the one or more object tokens, the object metadata information based on the OGA module 106 arranged to apply bounding box coordinates and object categories from object annotation data to the one or more video frames.

In the exemplary embodiment, the OGA module 106 may be further arranged/configured to order the extracted one or more human tokens and the extracted one or more object tokens to place the one or more human tokens in front of the one or more object tokens.

In the exemplary embodiment, the DIA module 108 may be arranged/configured to embed information associated with visual relationship using a concatenation process and a positional encoding process. In the exemplary embodiment, the DIA module 108 may be arranged/configured to embed information associated with spatial relationship using spatial embedding data and another concatenation process.

In the exemplary embodiment, the feature aggregation module 110 may be arranged/configured to combine different resultant processed HO tokens into the M groups, wherein each group represents action-level features trained using action annotations; and to aggregate the resultant processed HO tokens using a weight applied for each resultant processed HO token. The feature aggregation module 110 may be arranged/configured to perform a selection of the most decisive resultant processed HO tokens for action recognition.

In the exemplary embodiment, the prediction module 112 may be further arranged/configured to transmit the action recognition prediction result to the action apparatus 114 and to cause the action apparatus 114 to activate the action based on the action recognition prediction result.

In the exemplary embodiment, the action recognition prediction result may technically affect the action apparatus 114 that is external to the ORA module 104. For example, in an automotive application, with an action recognition prediction result, a possible corrective/preventive action may be activated. For example, if it is recognized that an action of a human is to pursue an object across a street, the action apparatus 114 may be caused to activate an action based on the action recognition prediction result, which may include, for example but not limited to, activating a braking mechanism of a vehicle to avoid impact on the human. Besides automotive applications, an action recognition prediction result may also be utilized in other applications such as, but not limited to, aerospace applications, engineering equipment operations applications etc. It is recognized by the inventors that an action recognition prediction result may be useful in applications where distraction of a user or another human may cause/induce accidents. As another example, it may be provided that with an action recognition prediction result, one or more alert mechanisms are activated. As another example, it may be provided that with an action recognition prediction result, an urgent display of the action recognition prediction result may be activated. This may be via a visual display on a screen to an operator/user.

In exemplary embodiments, the ORA model may usefully enhance/improve action recognition by using relation-aware attention and object guided insights to more accurately discern and classify actions based on dynamic interactions between humans and objects. As described, by fusing object and relation information in the stacked final layers of a Vision Transformer (ViT) model, patch tokens may usefully acquire such guiding information gradually in the object guided attention (OGA) branch while Human-Object (HO) tokens may obtain global representation based on general action-level information in the dynamic interaction attention (DIA) branch.

In one or more described exemplary embodiments, a ViT backbone is used to obtain patch tokens P focusing on global action information. With bounding box coordinates and category information, a RoIAlign process is adopted to extract human tokens H and object tokens O from P. H and O may then be used to interact with P to gradually shift attention to object related regions. The extracted human and object tokens enumerate all Human-Object (HO) pairs and are then combined with processed multi-dimension positional embedding to construct HO tokens HO. HO utilised as queries may perform cross-attention with P to conversely perceive global action information.

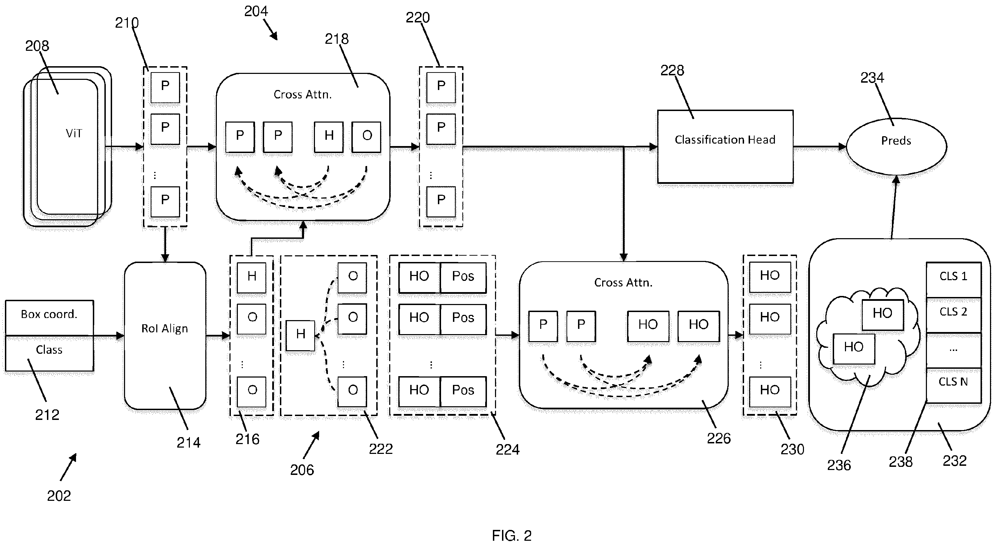

Further, by clustering different HO tokens supervised by action-level annotations, the feature aggregation module in the one or more described exemplary embodiments may select one or more most decisive HO tokens for action recognition. The weighted average of action recognition results and interaction results are used to obtain an action recognition prediction result. In the description, "interaction results" refer to prediction results (or actions) associated with human-object interaction from a DIA module/branch. For example, compare block 232 of FIG. 2 below.

FIG. 2 is a schematic block diagram for illustrating a computer-implemented method of object-augmented relation-aware action recognition in an exemplary embodiment. The method may be implemented using a deep learning or machine learning model termed as an Object-augmented Relation-aware Action recognition (ORA) model. In the exemplary embodiment, the ORA model is implemented as an ORA module 202. In the exemplary embodiment, the ORA module 202 is substantially similar, and functions substantially similarly, to the ORA module 104 of FIG. 1. The ORA module 202 comprises an Object-Guided Attention (OGA) module 204 and a Dynamic Interactive Attention (DIA) module 206. The ORA module 202 further comprises a feature aggregation module 232. Therefore, there are two branches, an OGA branch and a DIA branch, as illustrated in FIG. 2. FIG. 2 may be considered as an overall framework of the ORA model 202.

In the exemplary embodiment, the OGA module 204 comprises blocks 208, 210, 212, 214, 216, 218 and 220. The DIA module 206 comprises blocks 222, 224, 226 and 230. The OGA module 204 is coupled to or comprises a block 228 that is provided as a classification head. The DIA module 206 is further coupled to the feature aggregation module 232 or shown as block 232. The block 232 may function as another classification head. The feature aggregation module 232 is coupled to a block 234. In the exemplary embodiment, the classification head 228 is also coupled to the block 234. In the exemplary embodiment, the block 234 may be a prediction module 234. In the exemplary embodiment, the ORA module 202 further comprises the prediction module 234.

At block 208, a Vision Transformer (ViT) model is used to process one or more video frames. In the exemplary embodiment, a VideoMAE pretrained ViT model is used. It will be appreciated that VideoMAE is a modified version of a ViT model. The VideoMAE model is as taught in Z. Tong et al., Videomae: Masked autoencoders are data-efficient learners for self-supervised video pre-training, Advances in neural information processing systems 35 (2022) 10078- 10093; and the particular contents are incorporated by reference. In brief, VideoMAE uses an approach with a masking strategy for efficient pre-training, thus enhancing learning from smaller datasets. VideoMAE is also used in the exemplary embodiment for fast implementation. In other exemplary embodiments, it will be appreciated that the block 208 may be provided as an input module coupled to the ORA module 202. For example, compare to the input module 102 of FIG. 1.

In the exemplary embodiment, the OGA branch may introduce object tokens based on the VideoMAE pretrained ViT model.

Given a series of video frames $F \in \mathsf{R}^{T \times H \times W \times 3}$ as input, the early layers of the ViT model use 3D spatial-temporal convolution of size 2x16x16 to generate initial patch tokens at block 210 with the shape of $\frac{T}{2} \times \frac{H}{16} \times \frac{W}{16}$, and maps the patch tokens to d dimension. In the description here, R refers to a real-number matrix and TxHxWx3 defines its dimension. T refers to the number of frames, H refers to the height of each frame and W refers to the width of each frame.

Thus, as described, one or more initial patch tokens are obtained from one or more video frames.

In the exemplary embodiment, apart from video frames F, other inputs are also utilised. At block 212, using an off-the-shelf detector, object metadata $B \in \{b,c\}$ detected by the detector are used as supplementary input, where $b \in \mathsf{R}^{T \times N \times 4}$ are the coordinates of bounding boxes in relation to a video frame, $c \in \mathsf{R}^{T \times N}$ is the object category (or class) and N is a specified/predetermined maximum number of objects per frame. In the description for this portion, the term "objects" encompasses human(s) and other objects. Bounding boxes with the category human are placed/ordered on top/first and ranked in front of all other objects in each current frame, thus facilitating a subsequent matching of HO (Human-Object) pairs.

In the exemplary embodiment, the object-guided ViT layers use both patch tokens P from a previous layer (from block 210) and object metadata B from annotations (from block 212) as input. A first step is to extract object representations that align with the dimensions of patch tokens. At block 214, the step to extract object representations that align with the dimensions of the patch tokens is taken.

One method is to adopt a Region of Interest Align (RoIAlign) process/module to obtain human and object region crops. A RoIAlign process is taught e.g. by K. He et al., Mask r-cnn, in: Proceedings of the IEEE international conference on computer vision, 2017, pp. 2961- 2969; and the particular contents are incorporated by reference. At block 214, the RoIAlign process/module is followed by a multilayer perceptron (MLP) and a pooling layer to acquire complex feature representation and reduce the dimension to be consistent with the patch tokens. Equation (1) below is provided for the above implementation.

$$H = \text{MaxPool}(\text{MLP}(\text{RoIAlign}(P, B[: h])))$$
$$O = \text{MaxPool}(\text{MLP}(\text{RoIAlign}(P, B[h :]))) \quad (1)$$

In Equation (1), h represents the number of humans in the current frame and thus, human annotations are placed/ordered in front of all other object annotations.

In the exemplary embodiment, for each object instance in each video frame, a human token H and an object token O have the same dimension with an individual patch token $P \in \mathbb{R}^d$. Thus, the overall object tokens including the human category are $T \times N \times d$ vectors. In this exemplary embodiment, as this object token extraction is performed in every object-guided ViT layer, different patch tokens generate different human and other object tokens. A schematic representation of the output of block 214 is shown at block 216 with the human token with annotations placed/ordered in front of all other object tokens with object annotations.

Thus, as described, the one or more initial patch tokens are processed to extract one or more human tokens and one or more object tokens.

In the exemplary embodiment, to inject object information into patch tokens, at block 218, a multi-head crossattention (MHCA) process is performed between extracted object tokens $H_l$ and $O_l$ of block 216 and the patch tokens $P_l$ of block 210 for each *l*-th layer is performed. In the description herein, the MHCA process is termed as a first cross attention mechanism. Equation (2) below is provided for the above implementation.

$$P_l' = MHCA(P_l, concat[P_l], \text{concat}[P_l, H_l, O_l]) \quad (2)$$

$P_l$, $H_l$ and $O_l$ are combined as the key and value in the attention mechanism, thereby guiding the attention of the patch tokens query to the region containing the respective object.

At block 218, the first cross attention mechanism further utilises a normalization layer and a MLP layer. Equation (3) below is provided for the above implementation.

$$P_{l+1} = MLP(LayerNorm(P_l')) + P_l \quad (3)$$

The normalization layer and the MLP layer further refines the patch labels with a residual structure and feed them into the next layer *l* + 1. From Equation (2), $P_l'$ provides an intermediate variable for a next stage process (associated with an output by the multi head cross attention process) and $P_{l+1}$ of Equation (3) provides the patch token for the next layer.

After layers of object-guided attention aggregation, at block 220, the patch tokens containing object-guided information are generated. The inventors recognise that as the ViT backbone does not have a class token, a max pooling layer is performed along the H and W dimensions within each frame to obtain the frame-level overall representation for classification. A max pooling process may allow selection of a maximum value from a series of values. For example, a function maxpool (0.6,0.5,0.8) gives a value 0.8.

Thus, as described, the extracted one or more human tokens and the extracted one or more object tokens and the one or more initial patch tokens are applied to a first cross attention mechanism to obtain a set of processed patch tokens containing object-guided information.

After proposing the Object-guided Attention branch, the inventors recognise that wrong object information may be erroneously incorporated into action recognition in some cases due to a misinterpretation of a relationship between objects and actions. Thus, the inventors propose to introduce the interaction information between humans and objects such that the Object-augmented Relation-aware Action recognition (ORA) module 202 may distinguish a most significant/critical object for action recognition.

Furthermore, as will be described in more details below for Dynamic Interactive Attention (DIA) module 206, the HO pairs require/contain at least one human, which also meets the need/criteria for action recognition, i.e. since action recognition is for human action(s). Such processing assists the ORA module 202 to avoid a misjudgement of the 'no human' category.

From block 216, with the extracted human tokens H and corresponding other object tokens O for each video frame, at block 224, a human-object (HO) pairs table may be generated by enumerating all the tokens (see block 222). In some exemplary embodiments, the enumerating process may be performed by using an enumerate function provided in platforms such as, but not limited to, Python. The enumerating process or enumerate function combines the H tokens with O tokens into pairs. For example, if there are *m* H tokens and *n* O tokens, there can be provided M=*m*\**n* non repeatable H-O pairs, or M lines of H-O pairs. Firstly, *H* and *O* tokens concatenate together as the visual embedding of HO pairs with the dimension of 2d (or 2\**d* where *d* is the dimension of a token), for block 224. As a simplified example, if H is [0.1 0.2 0.3] and O is [0.4 0.5], then H-O is [0.1 0.2 0.3 0.4 0.5].

The inventors recognise that for most actions, the objects (other than a human) that dominate the action category are typically spatially close to the human. Thus, at block 224, a spatial embedding data termed as Pos that reflects the spatial relation between a human token and an object token is generated using a spatial embedding generator based on bounding box coordinates. The bounding box coordinates may be the coordinates of bounding boxes at block 212. For an HO token, the Pos data may be composed of bounding box coordinates, box area, relative box area, box aspect ratio, Intersection over Union (IoU) of the object and the human, and relative distance of the object with respect to the human. In the exemplary embodiment, a plurality of linear and activation layers are utilised to increase the dimension of the Pos data to $d$ dimension.

To construct the HO tokens of block 224, a multi-modality fusion block is adopted.

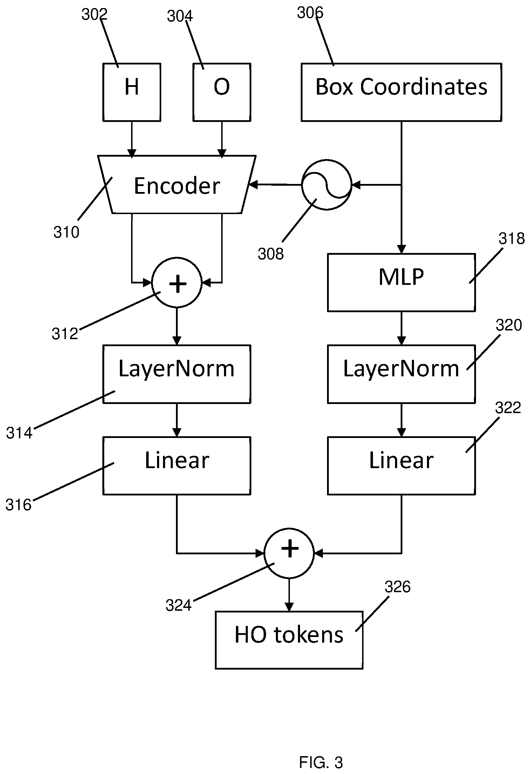

FIG. 3 is a schematic diagram for illustrating a sub-system for construction of Human-Object (HO) tokens in the exemplary embodiment. $H$ tokens 302 and $O$ tokens 304 from block 216 of FIG. 2 are provided as input. Data 306 such as bounding box coordinates data are also provided as positioning input. The data 306 is processed for positional encoding 308 and provided to one or more encoder layers 310 for processing with the $H$ tokens 302 and $O$ tokens 304. The $H$ tokens 302 and $O$ tokens 304, after processing with the one or more encoder layers 310, undergo a concatenation operation 312. The visual embedding, i.e. the concatenation of the $H$ tokens 302 and $O$ tokens 304, passes through a Fully Connected (FC) layer that comprises normalisation layer 314 coupled to a linear layer 316.

For the spatial embedding, the data 306 is processed by a multilayer perceptron (MLP) and passes through a normalisation layer 320 coupled to a linear layer 322. Such processing may extract deep features and maintain consistent dimensions after concatenation. The HO and Pos data undergo another concatenation operation 324 and the HO tokens 326 with visual and spatial embedding information are constructed. Compare block 224 of FIG. 2.

Returning to FIG. 2, at block 224, the shape of each constructed HO token is $R^d$, which aligns with previous processed patch tokens $P$ (the patch tokens containing object-guided information at block 220). For each video clip $V$, an $HO \in R^{T \times M \times d}$ vector is constructed, where $M$ is the maximum number of HO pairs.

Thus, as described, the extracted one or more human tokens and the extracted one or more object tokens are enumerated for the purpose of or to construct a set of Human-Object (HO) tokens. As described, the constructed HO tokens each comprises information associated with visual relationship and information associated with spatial relationship between a human token and an object token.

The inventors recognise that HO tokens (HO) may focus more on interactions between human tokens and object tokens, which may not have a comprehensive understanding of a whole video frame and the video. The inventors further recognise that such global information may be acquired from ViT-generated patch tokens P.

At block 226, a second cross attention mechanism is utilised. The process is similar to the first cross attention mechanism described above with reference to Equations (2) and (3). It will be appreciated that for the second cross attention mechanism, the key query and value set used, e.g. with reference to Equations (2) and (3), are different from those used for the first cross attention mechanism. By setting the concatenation of $HO$ (from block 224) and $P$ (from block 220, processed patch tokens) to the keys and values of the second cross attention mechanism, with the cross attention process, the $HO$ set can gradually gain an understanding of the entire video, thereby making a good balance between local HO attention and global action attention. The resultant processed $HO$ set is indicated at block 230.

Thus, as described, the constructed HO tokens and the processed patch tokens containing object-guided information are applied to a second cross attention mechanism to obtain a set of resultant processed HO tokens.

The inventors recognise that in most action recognition datasets, due to the lack of relation-level annotations for Human-Object (HO) tokens, it is not feasible to train on these tokens with the same level of supervision as traditional Human-Object Interaction (HOI) tasks. Consequently, the inventors recognise and propose to synthesize the features of M groups of HO tokens into a single feature representation.

At block 232, a feature aggregation module is provided. The feature aggregation module 232 may synthesize the features of M groups of HO tokens into a single feature representation by combining different HO tokens into groups e.g. 236, where each group represents action-level features trained using action annotations. The different classes 1 to N of action-level features (or annotations) are shown schematically at numeral 238.

For the HO tokens $HO \in R^{T \times M \times d}$ from a given video clip, all tokens aggregate to an intermediate feature $z \in R^d$. Each video clip contains $HO = \{ho_1, ho_2, ..., ho_{T \times M}\}$, then $z$ can be expressed with Equation (4) below as:

$$z = \sum_{i=1}^{T x M} a_i ho_i \qquad (4)$$

where $i = 1, 2, ..., T \times M$.

During the aggregation process, the weight of each token $a_i$ is determined through gated attention with Equation (5) below:

$$a_i = softmax\{\mathbf{w}^T(\tanh(\mathbf{V}\mathrm{ho}_i^T)) \odot sigm(\mathbf{U}\mathrm{ho}_i^T)\} \qquad (5)$$

where $\mathbf{w} \in R^h$, $V$ and $U \in R^{h \times d}$ are network parameters, h is the hidden dimension.

The inventors recognise that the above aggregation provided by the feature aggregation module 232 may usefully circumvent the inaccuracies typically introduced by the average pooling or max pooling process.

A simplified example of the above feature aggregation process is provided below.

In a video frame, if there are i humans and j objects, there are M=i*j H-O tokens. The feature aggregation process may sum the features of the M group of H-O tokens (for example, features x and y) together to form a new intermediate feature $z = w_x*x + w_y*y$. Each H-O token is assigned by a weight ($w_x$ or $w_y$). Compare Equations (4) and (5). This new feature z is the intermediate feature.

In training videos, there is a possibility that a human, a telephone (e.g. a mobile phone) and a baby car seat for a baby can appear in one or more frames of a video. Thus, the possible H-O tokens can be human-phone or human-car-seat. Action-level features trained using action annotations (such as "calling on a phone" or "texting on a phone" or "sitting in a baby car seat") facilitate to assign different weightage to these tokens. For example, the action-level features trained using action annotations may lack "sitting in a baby car seat", e.g. in the absence of a baby. Thus, for example, the weightage assigned may be a 0.99 for the human-phone token and 0.01 for the human-car-seat token. In such an example, the weightage for the human-car-seat token may be always assigned comparatively very low weightage, e.g. in the absence of a baby. As another simplified example, assuming that there are hypothetical features such as "hold a phone", "hand moves towards mouth", "hand touch steering wheel etc., a hypothetical intermediate feature z may be broadly considered as an aggregation or combination of all such hypothetical features with different weights tagged to such features. For example, 0.3*feature of "holding a phone" + 0.4*feature of "hand moves towards mouth" + ... . It will be appreciated that the above description has been simplified for understanding purposes only.

Furthermore, with Pos data, the position(s) of human-object is included in the ORA model. Thus, during training, the human-object pairs that are spatially close to each other are gradually assigned a higher weightage.

In the above example of using a phone, "phone" is recognised to be frequently around or in vicinity of the human in the video frames and thus, the human-phone token is assigned the highest weight among the possible H-O tokens and is identified as the most decisive H-O token.

In view of the above, features of all H-O tokens are added together to form a single intermediate feature (single feature representation) and the H-O tokens are assigned with different weights, and the H-O token with the highest weight is termed the "most decisive H-O token".

In the exemplary embodiment, a classification head 228 and a prediction module 234 is provided. The feature aggregation module 232 and the classification head 228 are coupled to the prediction module 234. The prediction module 234 is arranged to combine/process prediction results from the feature aggregation module 232 and the classification head 228 to provide an action recognition prediction result. One or more layers comprising a fully connected (FC) layer may be used to implement the classification head 228. Thus, the classification head 228 comprises fully connected layers to predict results from features, e.g. using action recognition from the OGA branch/module 204. The feature aggregation module 232 may be another classification head. The FC layer is employed to facilitate the process to classify z into a one-hot prediction vector $HO_{pred} \in R^C$, where C refers to the number of action classes. The feature aggregation module 232 is provided to predict results using Human-Object (H-O) interaction from the DIA branch/module 206.

Thus, as described, a prediction result is obtained based on the set of processed patch tokens containing object-guided information. Compare the classification head 228.

In the exemplary embodiment, the prediction module 234 is arranged to perform a weight summation process for obtaining a prediction result. For example, the prediction module 234 may combine/process prediction results from the classification head 228 and prediction results from the feature aggregation module 232 to provide an action recognition prediction result. For example, the prediction module 234 may use a weighted average of action recognition results (from the OGA branch/module 204) and interaction (H-O) results (from the DIA branch/module 206) to calculate an action recognition prediction result. See output of the prediction module 234.

Thus, as described, an action recognition prediction result is obtained based on a result of the feature aggregation process and the prediction result based on the set of processed patch tokens containing object-guided information.

In the exemplary embodiment, an output for use of an action recognition prediction result from the prediction module 234 may be implemented. The output may comprise transmitting the action recognition prediction result to an external action apparatus and causing the action apparatus to activate an action based on the action recognition prediction result. Compare the action apparatus 114 of FIG. 1.

A simplified example of using the ORA module 202 is provided below. The numerical values are described for illustration purposes only. It will be appreciated that in a real application, such values are high dimensional tensors. Such values may be from an array or a matrix, and it may broadly be considered that each value represents/describes an aspect of a token.

At block 208, a plurality of video frames is provided. At block 210, initial patch tokens are generated. An example patch token may be a token with example values [[0.1,0.2],[0.2,0.3],[0.2,0.3]]. Compare the shape $\frac{T}{2} \times \frac{H}{16} \times \frac{W}{16}$.

At block 212, for each video frame, object metadata are detected and used as supplementary input. For example, an example object label obtained may be [phone: [100,100], Human_0: [200,200], Human_2: [900,900]]. For such an example, for [phone: [100,100]], 'phone' indicates an object category and [100, 100] may indicate the object position in a frame. It will be appreciated that the above description has been simplified for understanding purposes only. For example, during an implementation, the object category may be indicated by an integer for a class and further, the values tagged to the object category may be a 4-dimensional data and/or may be normalized with a frame size.

At block 214, a Region of Interest Align (RoIAlign) process is performed to obtain human and object region crops. At block 216, a set of human and object tokens are obtained. In this example, objects that are not in the RoI are removed. An example object label obtained at block 216 may be [phone: [100,100], Human_0: [200,200]]. Thus, Human_2 has been removed.

At block 218, a first cross attention mechanism is performed using the extracted human tokens and the extracted object tokens from block 216 and the initial patch tokens from block 210. Compare Equations (2) and (3). At block 220, a set of processed patch tokens containing object-guided information is obtained. It will be appreciated that each processed patch token containing object-guided information is a multi-dimensional tensor, e.g. a 768 dimensional tensor. In one example, for each frame, there may be 16x16 patch tokens. In one example, there may be an example patch token of 3d tensor [0.4, 0.5, 0.1 ]. After the first cross attention mechanism is performed using the extracted human tokens and the extracted object tokens, e.g. if there are two objects in this example with one object laying on or comprised within this example patch token and one object being not comprised within this example patch token, the example patch token may be changed to, for example only, [0.6, 1.0, 0.2],[0.04,0.05,0.01]. With performance of a max pooling axis 0 (direction of objects), a processed patch token containing object-guided information is obtained at block 220 with [0.6, 1.0, 0.2]. As will be appreciated, it may broadly be considered that each value represents/describes an aspect of the token. It will be appreciated that the above description has been simplified for understanding purposes only and the values/numbers are for illustration only.

At block 228, the set of processed patch tokens containing object-guided information is processed by a classification head comprising a fully connected layer. The classification head 228 is arranged to predict results from features, e.g. using action recognition from the OGA branch/module 204. An example prediction result from the OGA branch/module 204 by the classification head 228 may be {"playing phone":0.5, "eating":0.6}.

For the DIA module 206, at block 222, an enumerating process is performed using the extracted human tokens and corresponding other object tokens O for each video frame from block 216. The enumerate function creates M = $m*n$ lines of H-O pairs, and for each pair, the H tokens are not yet jointed with O tokens. For example, a H token may have [1x j] dimension and an O token may have [1xk] dimension, and after the enumerate process, the pair is presented as, for example, [[1xj],[1xk]]. The concatenation process next joins this data together as a [1x (j+k)] format for processing in the later stages/blocks. In model training, it will be appreciated that a tensor with a shape of [1xj,1xk] and a tensor with a shape of [1x(j+k)] are different even though the same elements may be used. Among the M lines of H-O tokens, there is typically a most decisive token that affects the prediction result more than other tokens. This is appreciated to be how a model can select a proper H-O token, i.e. by assigning the most proper (decisive) token with the highest weight. For this example, during the training stage, human-phone pairs appear more frequently as compared to other human-object pairs and thus, human-phone tokens are assigned with higher weightage, making human-phone tokens the most decisive tokens in such conditions among the M lines (tokens) created by the concatenate process at block 222. In this example, there may be an object token for a baby car seat. An example of a HO token concatenate may be [human_0-phone : [0.24,0.44], human_0-babyseat : [0.10,0.83]]. In this example, the [human_0-phone : [0.24,0.44] token is the most decisive token, of the two tokens indicated. As will be appreciated, it may broadly be considered that each value for a H-O token represents/describes an aspect of the H-O token. It will be appreciated that the above description has been simplified for understanding purposes only and the values/numbers are for illustration only.

At block 224, Pos data or spatial embedding is provided to the HO tokens to construct a set of HO tokens, the constructed HO tokens now each comprising information associated with visual relationship (concatenate) and information associated with spatial relationship between a human token and an object token (containing the Pos data). Compare FIG. 3. An example of HO tokens aggregation with position information or Pos data may be [[0.13,0.43, 200, 200], [0.13,0.45, 400, 400]]. It will be appreciated that the values for a H-O token embedded with Pos data are numerical examples for illustration only. It will be appreciated that in an implementation, such H-Os token may each be a 768 dimensional tensor. It will be appreciated that the above description has been simplified for understanding purposes only.

At block 226, a second cross attention mechanism is performed using the constructed HO tokens from block 224 and the processed patch tokens containing object-guided information from block 220. At block 230, a set of resultant processed HO tokens is obtained. An example of a resultant processed HO token after undergoing the second cross attention mechanism may be [[0.6,0.7], [0.20,0.33], [0.04,0.03]].

At block 232, a feature aggregation process is performed based on the resultant processed HO tokens. Compare e.g. Equations (4) and (5). Equations (4) and (5) may describe how the aggregation process performs/works. As an example, given a token $ho_1$ = [ 1 2 3 4 ]$_{768}$ (totally 768 values/numbers), the token $ho_1$ is processed with equation (5) to obtain its weightage, for example, $a_1$ = 0.2. Similarly, for another token $ho_2$, its weightage may be provided as $a_2$ = 0.8 for $ho_2$ = [ 2 4 6 8 ]$_{768}$, and the process may compute for weights $a_3$, $a_4$... $a_M$, for the M lines. With the weights assigned for each token from the set of resultant processed HO tokens, the feature aggregation process proceeds to process/calculate the intermediate feature $z = a_1 * ho_1 + a_2 * ho_2 + ... + a_m * ho_m$ (refer to equation (4)). Within this process, equation (5) provides a largest number, for example $a_2$, and it may then be observed that $ho_2$ is the most decisive HO token. The back propagation of the training of the model provides a result that the parameters of equation (5) may eventually provide a correct/appropriate weightage to each token. In one example simplified implementation of the feature aggregation process, a set of random parameters may be initially transmitted to equation (5) and processed using the equation. These parameters are used to infer the model and provide a prediction result, e.g. processed through equations (5) and (4). If the prediction result is not appropriate, the set of parameters may be changed based on how inappropriate the prediction result is and another set of parameters is iteratively processed by the equations. As such, the feature aggregation module 232 is arranged to predict results using Human-Object (H-O) interaction from the DIA branch/module 206. An example prediction result from the DIA branch/module 206 by the feature aggregation module 232 may be {"playing phone":0.95, "eating":0.2}. As described, the different classes 1 to N (or e.g. nominally notated as 0 to N-1) of action-level features (or annotations) are shown schematically at numeral 238 of the feature aggregation module 232. For the above example, {"playing phone":0.95, "eating":0.2} represents that the DIA branch provides a prediction result as a possibility of "playing phone" is 0.95 and a possibility of "eating" is 0.2, and the number of action classes C for the prediction is predetermined/fixed, depending on a training dataset. In this example, C is 2, referring to the two possible actions above. That is, in this simplified example, the model predicts between these two action classes. It will be appreciated that the above description has been simplified for understanding purposes only.

At block 234, the prediction module 234 is provided to receive prediction results from the classification head 228 and from the feature aggregation module 232 to provide an action recognition prediction result. The prediction module 234 is arranged to perform a weight summation process for obtaining a prediction result. An example of a weight summation calculation/process may be Possibility of "playing phone" = [0.1 x Possiblity_OGA_branch] + [0.9 x Possibility_DIA_branch]. Compare the action of "playing phone" predicted by the classification head 228 and the feature aggregation module 232, i.e. Possiblity_OGA_branch and Possibility_DIA_branch respectively. The weights 0.1 and 0.9 may be predetermined and described here as examples only. In the example, an example output of the prediction module 234, i.e. after fusion of the two branches of the OGA branch/module 204 and the DIA branch/module 206, may be {"playing phone":0.9, "'eating":0.1}. The output is transmitted from the prediction module 234 as an action recognition prediction result. Based on the action recognition prediction result, e.g. with the action classes having a summed weightage to 1, the mostly likely action recognised may be determined. For example, for this example, based on the weightage 0.9 against 0.1, the mostly likely action recognised is "playing phone".

In the following description, an exemplary implementation of the ORA module 202 is described with the following technical details.

For the dataset, the Drive&Act dataset as taught in M. Martin et al., Drive&act: A multi-modal dataset for fine-grained driver behavior recognition in autonomous vehicles, in: Proceedings of the IEEE/CVF International Conference on Computer Vision, 2019, pp. 2801-2810 is used. The particular contents of M. Martin et al. are incorporated by reference. The Drive&Act dataset is recognised to be widely used in car cabin-related tasks including action recognition and multi-modality learning. It is composed of 12 coarse scenarios and 34 fine-grained action classes with five viewpoints (Front-top, Right-top, Back, Face-view, Left-top) and three different modalities (red-green-blue RGB (visible), Infrared, Depth). For the exemplary implementation, the front-top view, NIR (near-infrared) modality with fine-grained annotations is used as the action recognition setup to obtain a wider angle of view and light-invariant feature.

For the training of the ORA model 202, the pre-trained VideoMAE base model is utilised as the model's backbone. For input, original videos or video data are truncated into relatively smaller video clips, each with a length of 90 video frames in a preprocessing process, and according to the video category. The processed smaller video clips are temporally sampled to collect 16 video frames randomly. The video clips are re-sized to the size of 224x224 followed by a RandomFlip operation, e.g. available in PyTroch. The token embedding size is determined as (2, 16, 16), and the feature dimension is determined as 768 which aligns with VideoMAE as taught in Z. Tong et al..

The inventors recognise that as the Drive&Act dataset does not provide bounding box annotations for object detection, for the exemplary implementation, an off-the-shelf detector trained with a manually annotated subset is used to obtain the detected objects of the whole dataset. More than 1500 IR images were extracted from the original videos or video data, and over 8200 object instances were extracted and identified. 15 classes of objects appearing in the videos are annotated, including but not limited to person, wearable objects (glasses, jacket, etc.), interaction objects (bottle, food, cigarette, cellphone, etc.) and other common objects in the car cabin environment (seatbelt, backpack, bag, laptop, paper, etc.).

As described above, in the exemplary implementation, an off-the-shelf object detector such as PP-YOLOE as taught in S. Xu et al., Pp-yoloe: An evolved version of yolo, arXiv preprint arXiv:2203.16250 (2022) is used to detect all of the objects in the original videos or video data. The particular contents of S. Xu et al. are incorporated by reference. In the exemplary implementation, the OGA and DIA branches (compare the OGA module 204, the DIA module 206 and the feature aggregation module 232) are introduced in the last three layers (10, 11, 12) of the ViT VideoMAE backbone. The maximum number of objects in one frame M is set to 4, e.g. following the recommended parameter(s) in R. Herzig et al., Object-region video transformers, in: Proceedings of the ieee/cvf conference on computer vision and pattern recognition, 2022, pp. 3148-3159(whose particular contents are incorporated by reference), and the maximum HO pairs number N is determined as 6 accordingly. The weight $\lambda$ of the HO branch is set to 0.2 empirically.

In the exemplary implementation, all experiments are conducted using 4 RTX 3090 Graphics Processing Units (GPUs) with a batch size of 8. The AdamW optimizer (stochastic optimization method/process) is utilized with a step learning rate of [10e-4, 10e-5, 10e-6] at [0, 20, 30] epochs, e.g. following the recommended parameter(s) in R. Herzig et al. as identified above. In the exemplary implementation, the ORA model is trained for 35 epochs in total using label smoothing cross-entropy loss.

The exemplary implementation of the ORA module 202 is then evaluated with the driver monitoring dataset Drive&Act against other known action recognition models for a fair comparison.

The inventors follow previous studies such as M. Martin et al. introduced above and D. Lin et al., Multi-modality action recognition based on dual feature shift in vehicle cabin monitoring, arXiv preprint arXiv:2401.14838 (2024), whose contents are incorporated by reference, to set Top-1 Accuracy (Top-1 Acc.) and Balanced Accuracy (Bal Acc.) as the main evaluation metrics. Balanced Accuracy is the mean of per class Top-1 Accuracy, which may better reflect a model's ability to handle class-imbalanced problems. As three different dataset splits are provided in the Drive&Act dataset, the results are the mean of three splits following previous methods. Table 1 below tabulates results from state-of-the-art action recognition methods and the ORA model (indicated at the last line of Table 1).

Table 1

| Methods | Top-1 Acc. | Top-5 Acc. | Bal. Acc. |
|---|---|---|---|
| UniformerV2 | 70.91 | 93.15 | 59.57 |
| ViT-Base | 79.60 | 97.50 | 61.59 |
| ORViT | 82.62 | 96.59 | 65.62 |
| ORA | 85.49 | 98.31 | 68.96 |

According to the results shown in Table 1, it is observed that the ORA model having a Top-1 Acc. value of 85.49 and a Bal. Acc. value of 68.96 has better accuracy values than the other ViT backbone and existing models. Thus, it is observed that the ORA model outperforms the other state-of-the-art methods.

In analysing the ORA model of one or more exemplary embodiments, the inventors recognise that the ORA model differs in several aspects from some studies in the current art. For example, the ORA model is based on a transformer-based model that may be fundamentally different from other forms of machine learning models such as CNNs. The attention mechanism may provide greater potential in robustness in dynamic environments. For example, the ORA model utilises appearance-based feature detection. This may usefully enable a learning model of understanding features in videos. For example, processed patch tokens are used with HO tokens in a mid-stage fusion (prior to e.g. feature aggregation, and as opposed to late-stage fusion in some studies), compare e.g. numerals 216, 218, 220, 222 and 224 leading to the second cross attention mechanism at numeral 226. For example, the ORA model utilises object detection that may usefully provide position information to the ORA model as well as provide categories/classes of objects for extra features. In one or more exemplary embodiments, object labels and positions are passed to the ORA model and this may enable extra features of human - object cross information to be passed to an action classifier. For example, the ORA model of one or more exemplary embodiments does not need additional word embedding processing to images/frames and/or does not need pose information added to images/frames. As such extra input is not needed, there is improved flexibility of using the ORA model in more applications. Furthermore, exemplary embodiments are directed to action recognition which is broadly to identify and categorise human actions in a video. Action recognition is as opposed to HOI tasks which are generally to identify a set of interactions in an image. HOI tasks usually involve localization of subject (e.g. human) and target (i.e. objects) of interaction, and the classification of interaction labels. It is recognised that in exemplary embodiments for action recognition, object information is used to enhance the accuracy of action recognition for e.g. a human, while the interactions between subject and targets is largely not used or irrelevant to such exemplary embodiments.

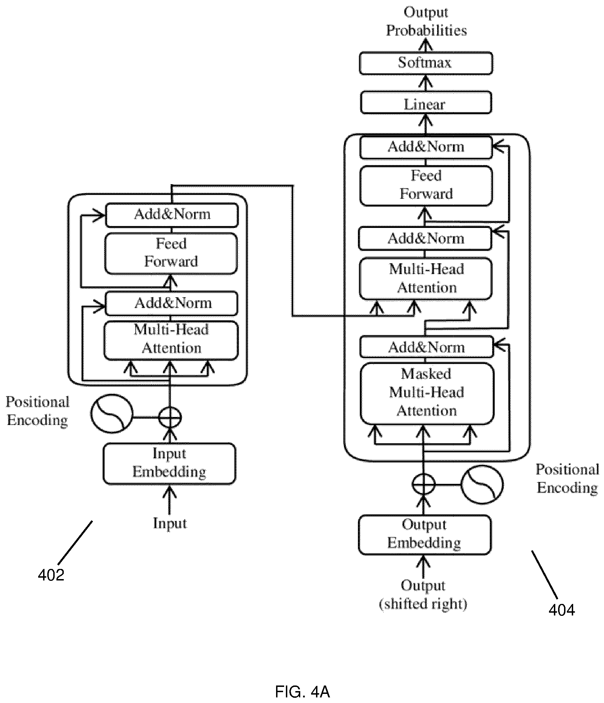

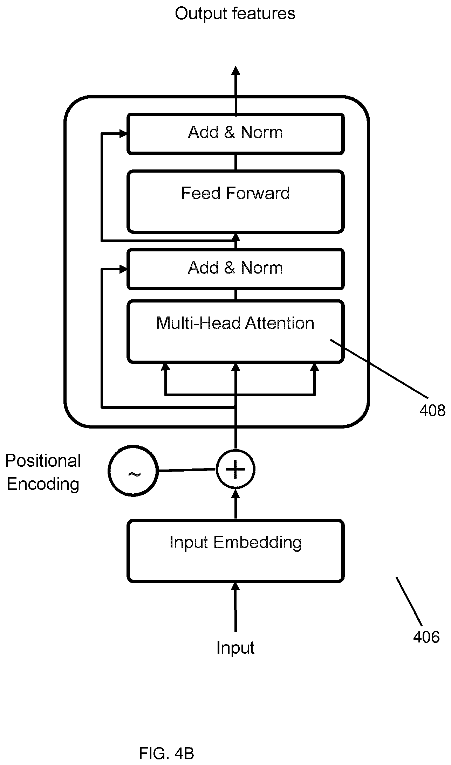

FIG. 4A is a schematic drawing illustrating a typical Transformer model structure. As will be appreciated, the exemplary embodiments described herein utilize a transformer-based model structure. FIG. 4 is provided to introduce some concepts associated with transformer-based model structures that would otherwise be familiar to a person skilled in the relevant art.

A transformer structure is a type of deep learning model architecture that comprises a number of characteristic components as follows. A transformer allows the use of a self-attention mechanism whereby attention allows a model to focus on different parts of an input sequence when making predictions. In a transformer, each token in an input can attend to every other word to capture dependencies, regardless of distance in the sequence. Self-attention refers to a process where a token attends to other tokens in a same sequence to understand context. A transformer also makes use of positional encodings that are added to the input embeddings to give the model information about the relative positions of tokens in a sequence. Further, a transformer may use multiple attention mechanisms in parallel (multi-head). This allows a model to capture different types of relationships between tokens. In addition, a transformer may comprise feedforward neural networks that are fully connected layers to further process an output from the attention layers. A transformer may have normalisation layers and a residual connection after each layer, which can help with training deeper networks. Further, a transformer may comprise an encoder-decoder structure, such as seen at numerals 402 and 404 respectively. For an encoder e.g. 402, the encoder processes an input sequence and produces a set of encodings. Each encoding represents the input with contextual information from the entire sequence. For a decoder e.g. 404, the decoder uses the encodings and generates an output sequence, e.g. in a different format.

A transformer may provide some advantages including parallelization (as opposed to sequential processing) since a transformer can process an entire sequence at once, enabling faster training with parallel processing; and having long-range dependencies since the self-attention mechanism allows a transformer to effectively capture dependencies across long distances in a sequence.

A transformer structure may be adapted for video processing since videos can be considered as sequences of frames (images). Thus, a transformer can process sequences of frames in video. Each frame can be treated similarly to how a word or token is treated in natural language processing. Recognising that in video processing, both spatial (within a frame) and temporal (across frames) information can be significant information, a transformer can be adapted to capture such information through spatio-temporal attention mechanisms. Such mechanisms allow a model to focus on relevant parts of a video across both time and space. With the above progress, Vision Transformers (ViTs) can be extended to video by treating the video frames as sequences of image patches. Typically, each frame is divided into patches and these patches across multiple frames may be fed into a transformer to learn both spatial and temporal dependencies. In the division, each frame in the video may be divided into non-overlapping or overlapping patches. Such patches may typically be square regions of the frame, such as 16x16 or 32x32 pixels. Typically, each patch is flattened into a 1D vector and then passed through a linear projection layer (e.g. a fully connected layer) to create a lower-dimensional embedding. This process transforms each patch into a token that can be processed by a transformer. Further, to assist a transformer to understand the order or position of patches, positional encodings are added to patch tokens. These encodings allow a model to understand the spatial position within a frame and, when dealing with video, the temporal order across frames. In some applications, the transformer architecture may be extended to operate in three dimensions, where the third dimension represents the temporal aspect. Such models may directly learn features from the spatio-temporal volume of video data. In some applications, a transformer may use a hierarchical approach where the transformer operates at multiple scales, e.g. first processing short sequences of frames (e.g. capturing fine details) and then processing longer sequences (e.g. capturing broader context).

In exemplary embodiments, cross-attention has been utilized. In the context of a transformer, cross-attention is a mechanism that allows one sequence of data to attend to another sequence, facilitating the integration of information across different data sources or stages in a model. Cross-attention may be commonly used in the decoder part of a transformer architecture where the model attempts to generate an output sequence based on an input sequence. Typically, for cross-attention, the attention mechanism computes a weighted sum of input elements, where the weights (attention scores) indicate how much focus each input element is to receive. This allows a model to consider relevant parts of an input when generating outputs. A transformer can utilize self-attention where each element in a sequence attends to other elements within the same sequence, to capture internal relationships. A transformer can utilize the cross-attention where the elements in one sequence (e.g. the decoder's current output sequence) attend to elements in another sequence (e.g. the encoder's output). This allows a model to incorporate external information from the encoder when generating the output sequence. In general, a process of cross-attention comprises having queries that come from a current layer of a decoder (e.g. related to the output sequence being generated); having keys and values that come from the output of an encoder (e.g. related to the input sequence). Typically, a decoder uses cross-attention to determine which parts of an encoder's output (e.g. the input sequence's representation) are most relevant to a current decoding step. This helps a model produce contextually appropriate output. It is recognized that cross-attention can be usefil in models that integrate information from different modalities (e.g. text and images in visual question answering, or spatial and visual relationships etc.), allowing the text to attend to image features or vice versa. In summary, cross-attention may be a powerful mechanism within a transformer architecture that facilitates interaction between different sequences, enabling a model to generate outputs that are deeply informed by relevant parts of an input sequence. It may be useful in tasks that utilise a close relationship between input and output.

In exemplary embodiments, a classification head is described. In the context of a transformer, a classification head is a component that typically sits on top of the core transformer architecture and is used for performing the final task-specific prediction, typically for classification tasks. A classification head converts the output of the transformer into a format suitable for making a decision, such as predicting a class label. A classification head is typically a small neural network that may comprise a feedforward layer or a few layers that take the final output from a transformer and transforms it into a probability distribution over the possible classes. The output of a classification head may be a softmax layer in the case of multi-class classification, producing a probability for each class.

In exemplary embodiments, a RolAlign technique is described. In general, Rol Align is a technique used to accurately extract and align features from specific regions of an image, which are typically proposed by a region proposal method. Typically, in object detection models, regions of interest (Rols) are proposed as potential bounding boxes where objects may be located. These Rols are then mapped onto a feature map. In Vision Transformer (ViT) adaptations, features from different patches (or tokens) of an image may need to be aligned accurately to regions of interest. Rol Align can be used to ensure that the features extracted from these regions are relatively precise and retain spatial information.

In exemplary embodiments, feature aggregation is proposed. In general, feature aggregation refers to a process of combining or pooling the features (representations) generated by a transformer to produce a summary or consolidated representation that can be used for downstream tasks, such as classification, sequence labeling, or other forms of decision-making. A transformer may typically generate a sequence of feature vectors (also called embeddings) corresponding to input tokens. Each vector can represent the input element enriched with contextual information from the entire sequence, with usage of the self-attention mechanism. For different tasks, such as those that require a single output (e.g. image classification or action recognition), it is beneficial to aggregate these feature vectors into a single, compact representation. This representation can then be fed into a classification head or another model component for final decision-making.

FIG. 4B is a schematic drawing illustrating an example Transformer model structure in an exemplary embodiment. The example model structure 406 may be used for the exemplary embodiments described herein.

In the exemplary embodiment, a transformer encoder portion (compare numeral 402) is used. As schematically illustrated, a multi-head attention setup 408 is used. Other structures/parts of an ORA module are not shown for simplicity of illustration and it will be appreciated that these parts are to facilitate features operations that provide input to the transformer structure 406.

The inventors recognize that a decoder portion (compare numeral 404) is not required in exemplary embodiments (as a classification task).

As an example, with reference to FIG. 2, blocks 208, 218 and 226 are implemented as encoder blocks. For example, at input module 208, frames may be provided as input and patch features (or patch tokens) are obtained as output. Compare block 210 with the initial patch tokens. For example, at block 218, for the first cross attention mechanism, extracted one or more human tokens and extracted one or more object tokens (compare block 216) and the initial patch tokens (compare block 210) may be provided as input and processed patch tokens containing object-guided information are obtained as output (compare block 220). For example, at block 226, for the second cross attention mechanism, constructed HO tokens (compare block 224) and processed patch tokens containing object-guided information (compare block 220) may be provided as input and resultant processed HO tokens are obtained as output (compare block 230).

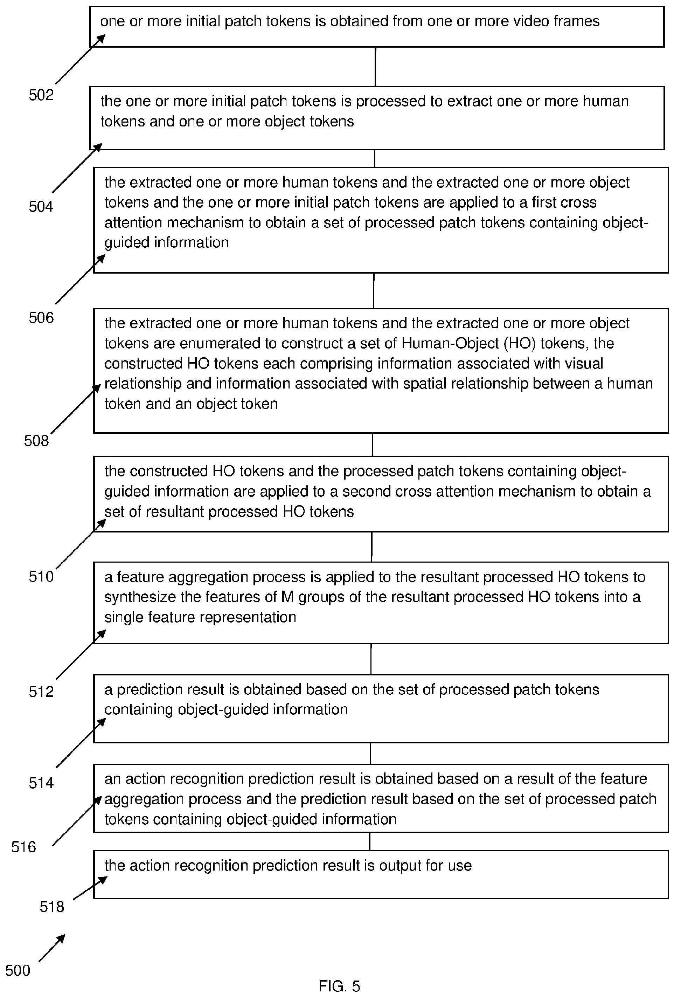

FIG. 5 is a schematic block diagram 500 for illustrating a method of object-augmented action recognition in an exemplary embodiment. The method is a computer-implemented method. At step 502, one or more initial patch tokens is obtained from one or more video frames. At step 504, the one or more initial patch tokens is processed to extract one or more human tokens and one or more object tokens. At step 506, the extracted one or more human tokens and the extracted one or more object tokens and the one or more initial patch tokens are applied to a first cross attention mechanism to obtain a set of processed patch tokens containing object-guided information. At step 508, the extracted one or more human tokens and the extracted one or more object tokens are enumerated to construct a set of Human-Object (HO) tokens, the constructed HO tokens each comprising information associated with visual relationship and information associated with spatial relationship between a human token and an object token. At step 510, the constructed HO tokens and the processed patch tokens containing object-guided information are applied to a second cross attention mechanism to obtain a set of resultant processed HO tokens. At step 512, a feature aggregation process is applied to the resultant processed HO tokens to synthesize the features of M groups of the resultant processed HO tokens into a single feature representation. At step 514, a prediction result is obtained based on the set of processed patch tokens containing object-guided information. At step 516, an action recognition prediction result is obtained based on a result of the feature aggregation process and the prediction result based on the set of processed patch tokens containing object-guided information. At step 518, the action recognition prediction result is output for use.

In an exemplary embodiment, the step of processing the one or more initial patch tokens to extract one or more human tokens and one or more object tokens may comprise using object metadata information to extract the one or more human tokens and the one or more object tokens, the object metadata information based on applying bounding box coordinates and object categories from object annotation data to the one or more video frames. The step of processing the one or more initial patch tokens to extract one or more human tokens and one or more object tokens may further comprise ordering the extracted one or more human tokens and the extracted one or more object tokens to place the one or more human tokens in front of the one or more object tokens. The step of enumerating the extracted one or more human tokens and the extracted one or more object tokens to construct a set of HO tokens may further comprise embedding information associated with visual relationship using a concatenation process and a positional encoding process. The step of enumerating the extracted one or more human tokens and the extracted one or more object tokens to construct a set of HO tokens may further comprise embedding information associated with spatial relationship using spatial embedding data and another concatenation process. The step of applying a feature aggregation process may comprise combining different resultant processed HO tokens into the M groups, wherein each group represents action-level features trained using action annotations and aggregating the resultant processed HO tokens using a weight applied for each resultant processed HO token. The step of applying a feature aggregation process to the resultant processed HO tokens may further comprise a selection of the most decisive resultant processed HO tokens for action recognition. The step of outputting for use the action recognition prediction result may comprise transmitting the action recognition prediction result to an action apparatus and causing the action apparatus to activate an action based on the action recognition prediction result.

In an exemplary embodiment, there may be provided a non-transitory tangible computer readable storage medium having stored thereon software instructions that, when executed by a computer processor of an object-augmented action recognition system, cause the computer processor to perform a computer-implemented method of object-augmented action recognition, the computer-implemented method as described above, e.g. with reference to FIG. 5.

In the exemplary embodiment, object annotation information is utilised to generate object tokens (inclusive of humans). Such object tokens are then applied to a first cross attention mechanism with initial patch tokens derived from video frames. One technical effect/benefit is that such a mechanism allows for a targeted consideration of object-related information, and further, ensuring that the model's attention is fine-tuned to object-related details.

In the exemplary embodiment, object annotations are also used to distinguish humans and objects, and to generate human-object (HO) tokens that encapsulate the visual characteristics and spatial relationships of object tokens (inclusive of humans). These HO tokens are then applied to a second cross-attention process with processed patch tokens. One technical effect/benefit is that such a mechanism allows for an ability to perceive and interpret the overall/global action.

In the exemplary embodiment, with the feature aggregation process, one technical effect/benefit is that token-level features may be merged into a unified action-level output. For example, by clustering different HO tokens supervised by action-level annotations, the feature aggregation process can select the most decisive HO tokens for action recognition.

With the exemplary embodiment, one technical problem that may be solved is how to obtain a more accurate action recognition result. One technical solution may utilise the number of different technical effects/benefits above to provide a more object-relevant or object-guided and a relation-guided (spatial and/or visual relationship between a human and an object) action recognition process to in turn provide a more accurate action recognition prediction result.

In the described exemplary embodiments, there is provided an effective dual-branch action recognition model that may incorporate both object visual information (or object annotation information) and human-object relation information. Furthermore, there is provided a feature aggregation module that facilitates action-level annotations to be used to supervise relation-level HO features effectively. The inventors recognise that that the proposed ORA model can be adapted to any transformer-based action recognition model.

In providing the exemplary embodiments, the inventors recognize that interactions between people (or humans) and objects are not merely information that is not useful but such information may become integral to an accurate interpretation of actions of a human. For example, several objects may appear in a video clip at a same time and the inventors recognise that not all objects may be relevant and only a part of the decisive objects may be causally related to the action of a human. Therefore, the inventors recognize that an understanding of the interaction may improve an action recognition model's action recognition performance.

In providing the exemplary embodiments, the inventors propose a novel framework termed as Object-augmented Relation-aware Action recognition (ORA) as described in the described exemplary embodiments. An ORA model has been specifically designed to integrate and exploit dynamic interactions between humans and objects. In exemplary embodiments, an ORA model utilises a dual-branch approach, e.g. comprising usage of an Object-Guided Attention (OGA) module and an Dynamic Interactive Attention (DIA) module. The OGA module can utilize object annotation information to generate object tokens which are then used to participate in a first cross attention mechanism with patch tokens derived from video frames. This mechanism or utilization usefully allows for targeted consideration of object-related information and may direct the ORA model's attention to be more fine-tuned to object-related details/information/data. Concurrently, the DIA module can use object annotations to distinguish humans and objects, and can then generate/create human-object (HO) tokens that encapsulate/comprises visual characteristics and spatial relationships of object tokens. That is, these human-object (HO) tokens are based on the visual and spatial relationships of object tokens. Such HO tokens are then used in a second cross-attention process/mechanism with the processed patch tokens of the OGA module, thereby usefully improving/enhancing the DIA module's ability to perceive and interpret the overall action of the video clip, i.e. enhancing an overall action perception.

Furthermore, in providing the exemplary embodiments, the inventors recognize a potential inconsistency between the scale of token-level features and a desired action-level output. The inventors propose a feature aggregation module that may utilize attention mechanisms and gating methods to add weights and merge token-level features into cohesive action level outputs e.g. into a unified action-level output. This may usefully and effectively resolve inconsistencies and may ensure a relatively harmonious/consistent feature representation. That is, the misalignment between the scale of outputs and feature granularity may be addressed.

In one or more described exemplary embodiments, the efficacy of the ORA model has been rigorously evaluated on the Drive&Act dataset which is recognized as a challenging action recognition benchmark. The experimental results demonstrate significant performance improvements compared to baseline models and other action recognition frameworks. The results validate the effectiveness of the ORA model and also highlight a significant consideration of incorporating detailed object and human interaction dynamics to achieve more accurate and context-rich action recognition.

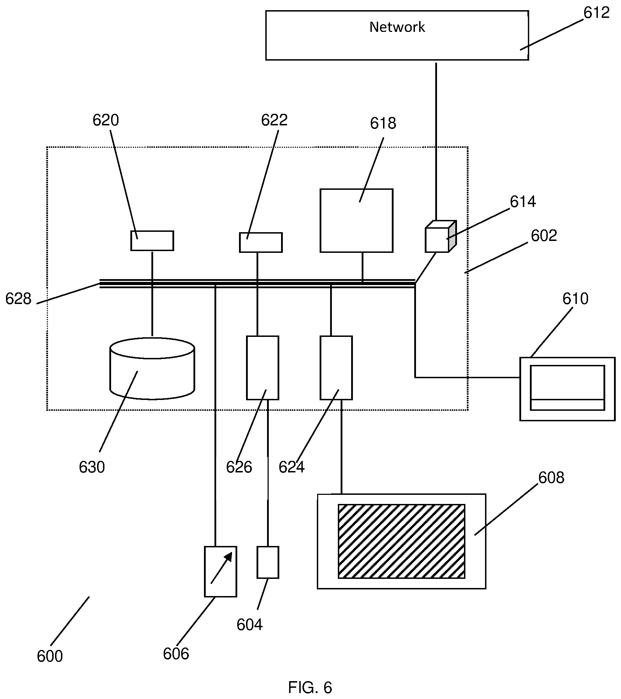

FIG. 6 is a schematic drawing of a computer system suitable for implementing an exemplary embodiment.

Different exemplary embodiments can be implemented in the context of data structure, program modules, program and computer instructions executed in a computer implemented environment. A general purpose computing environment is briefly disclosed herein. One or more exemplary embodiments may be embodied in one or more computer systems, such as is schematically illustrated in FIG. 6.

One or more exemplary embodiments may be implemented as software, such as a computer program being executed within a computer system 600, and instructing the computer system 600 to conduct or implement a method of an exemplary embodiment.

The computer system 600 comprises a computer unit 602, input modules such as a keyboard 604 and a pointing device 606 and a plurality of output devices such as a display 608, and printer 610. A user can interact with the computer unit 602 using the above devices. The pointing device can be implemented with a mouse, track ball, pen device or any similar device. One or more other input devices (not shown) such as a joystick, game pad, satellite dish, scanner, touch sensitive screen or the like can also be connected to the computer unit 602. The display 608 may include a cathode ray tube (CRT), liquid crystal display (LCD), field emission display (FED), plasma display or any other device that produces an image that is viewable by the user.

The computer unit 602 can be connected to a computer network 612 via a suitable transceiver device 614, to enable access to e.g. the Internet or other network systems such as Local Area Network (LAN) or Wide Area Network (WAN) or a personal network. The network 612 can comprise a server, a router, a network personal computer, a peer device or other common network node, a wireless telephone or wireless personal digital assistant. Networking environments may be found in offices, enterprise-wide computer networks and home computer systems etc. The transceiver device 614 can be a modem/router unit located within or external to the computer unit 602, and may be any type of modem/router such as a cable modem or a satellite modem.

It will be appreciated that network connections shown are exemplary and other ways of establishing a communications link between computers can be used. The existence of any of various protocols, such as TCP/IP, Frame Relay, Ethernet, FTP, HTTP and the like, is presumed, and the computer unit 602 can be operated in a client-server configuration to permit a user to retrieve web pages from a web-based server. Furthermore, any of various web browsers can be used to display and manipulate data on web pages.

The computer unit 602 in the example comprises a processing unit or processor 618, a Random Access Memory (RAM) 620 and a Read Only Memory (ROM) 622. The ROM 622 can be a system memory storing basic input/ output system (BIOS) information. The RAM 620 can store one or more program modules such as operating systems, application programs and program data.

The computer unit 602 further comprises a number of Input/Output (I/O) interface units, for example I/O interface unit 624 to the display 608, and I/O interface unit 626 to the keyboard 604. The components of the computer unit 602 typically communicate and interface/couple connectedly via an interconnected system bus 628 and in a manner known to the person skilled in the relevant art. The bus 628 can be any of several types of bus structures including a memory bus or memory controller, a peripheral bus, and a local bus using any of a variety of bus architectures.

It will be appreciated that other devices can also be connected to the system bus 628. For example, a universal serial bus (USB) interface can be used for coupling a video or digital camera to the system bus 628. An IEEE 1394 interface may be used to couple additional devices to the computer unit 602. Other manufacturer interfaces are also possible such as FireWire developed by Apple Computer and i.Link developed by Sony. Coupling of devices to the system bus 628 can also be via a parallel port, a game port, a PCI board or any other interface used to couple an input device to a computer. It will also be appreciated that, while the components are not shown in the figure, sound/audio can be recorded and reproduced with a microphone and a speaker. A sound card may be used to couple a microphone and a speaker to the system bus 628. It will be appreciated that several peripheral devices can be coupled to the system bus 628 via alternative interfaces simultaneously.

An application program can be supplied to the user of the computer system 600 being encoded/stored on a data storage medium such as a CD-ROM or flash memory carrier. The application program can be read using a corresponding data storage medium drive of a data storage device 630. The data storage medium is not limited to being portable and can include instances of being embedded in the computer unit 602. The data storage device 630 can comprise a hard disk interface unit and/or a removable memory interface unit (both not shown in detail) respectively coupling a hard disk drive and/or a removable memory drive to the system bus 628. This can enable reading/writing of data. Examples of removable memory drives include magnetic disk drives and optical disk drives. The drives and their associated computer-readable media, such as a floppy disk provide nonvolatile storage of computer readable instructions, data structures, program modules and other data for the computer unit 602. It will be appreciated that the computer unit 602 may include several of such drives. Furthermore, the computer unit 602 may include drives for interfacing with other types of computer readable media.

The application program is read and controlled in its execution by the processor 618. Intermediate storage of program data may be accomplished using RAM 620. The method(s) of the exemplary embodiments can be implemented as computer readable instructions, computer executable components, or software modules. One or more software modules may alternatively be used. These can include an executable program, a data link library, a configuration file, a database, a graphical image, a binary data file, a text data file, an object file, a source code file, or the like. When one or more computer processors execute one or more of the software modules, the software modules interact to cause one or more computer systems to perform according to the teachings herein.

The operation of the computer unit 602 can be controlled by a variety of different program modules. Examples of program modules are routines, programs, objects, components, data structures, libraries, etc. that perform particular tasks or implement particular abstract data types. The exemplary embodiments may also be practiced with other computer system configurations, including handheld devices, multiprocessor systems, microprocessor-based or programmable consumer electronics, network PCs, minicomputers, mainframe computers, personal digital assistants, mobile telephones and the like. Furthermore, the exemplary embodiments may also be practiced in distributed computing environments where tasks are performed by remote processing devices that are linked through a wireless or wired communications network. In a distributed computing environment, program modules may be located in both local and remote memory storage devices.

In the description herein, the terms "coupled" or "connected" as used are intended to cover both directly connected or connected through one or more intermediate means, unless otherwise stated. The terms "adjacent", "previous", "next" where used are intended to cover both directly adjacent or indirectly adjacent with one or more intermediate layers in between two layers/parts/components/objects and the like.

In the description herein, the terms "first", "second", third", "fourth" and the like where used are used to refer to parts/components of the respective figures. These terms are not intended to be limiting or limited to a specific part/component. Rather, the terms should be read with the respective figures and the meanings ascribed accordingly.

The use of "a", "an" or "the" is intended to mean "one or more" unless it is described specifically to the contrary.

The terms "configured to (perform a task/action)", "configured for (performing a task/action)" and the like as used in this description include being programmable, programmed, connectable, wired or otherwise constructed to have the ability to perform the task/action when arranged or installed as described herein. The terms "configured to (perform a task/action)", "configured for (performing a task/action)" and the like are intended to cover "when in use, the task/action is performed", e.g. specifically to and/or specifically configured to and/or specifically arranged to and/or specifically adapted to do or perform a task/action.

The term "and/or", e.g., "X and/or Y" is understood to mean either "X and Y" or "X or Y" and should be taken to provide explicit support for both meanings or for either meaning. The use of "or" is intended to mean an "inclusive or," and not an "exclusive or" unless it is described specifically to the contrary.

The terms "associated with", "related to" and the like used herein when referring to two elements refers to a broad relationship between the two elements. The relationship includes, but is not limited to, a physical, a chemical or a biological relationship. For example, when element A is associated with element B, elements A and B may be directly or indirectly attached to each other or element A may contain element B or vice versa.

The terms "exemplary embodiment", "example embodiment", "exemplary implementation", "exemplarily" and the like used herein are intended to indicate an example of matters described in the present disclosure. Such an example may relate to one or more features defined in the claims and is not necessarily intended to emphasise a best example or any essentialness of any features.

The description herein may be, in certain portions, explicitly or implicitly described as algorithms and/or functional operations that operate on data within a computer memory or an electronic circuit. These algorithmic descriptions and/or functional operations are usually used by those skilled in the information/data processing arts for efficient description. An algorithm is generally relating to a self-consistent sequence of steps leading to a desired result. The algorithmic steps can include physical manipulations of physical quantities, such as electrical, magnetic or optical signals capable of being stored, transmitted, transferred, combined, compared, and otherwise manipulated.

Further, unless specifically stated otherwise, and would ordinarily be apparent from the following, a person skilled in the art will appreciate that throughout the present specification, discussions utilizing terms such as "scanning", "calculating", "determining", "replacing", "generating", "initializing", "outputting", and the like, refer to action and processes of an instructing processor/computer system, or similar electronic circuit/device/component, that manipulates/processes and transforms data represented as physical quantities within the described system into other data similarly represented as physical quantities within the system or other information storage, transmission or display devices etc.

The description also discloses relevant device/apparatus for performing the steps of the described methods. Such apparatus may be specifically constructed for the purposes of the methods, or may comprise a general purpose computer/processor or other device selectively activated or reconfigured by a computer program stored in a storage member. The algorithms and displays described herein are not inherently related to any particular computer or other apparatus. It is understood that general purpose devices/machines may be used in accordance with the teachings herein. Alternatively, the construction of a specialized device/apparatus to perform the method steps may be desired.

In addition, it is submitted that the description also implicitly covers a computer program, in that it would be clear that the steps of the methods described herein may be put into effect by computer code. It will be appreciated that a large variety of programming languages and coding can be used to implement the teachings of the description herein. Moreover, the computer program if applicable is not limited to any particular control flow and can use different control flows without departing from the scope of the invention.

Furthermore, one or more of the steps of the computer program if applicable may be performed in parallel and/or sequentially. Such a computer program if applicable may be stored on any computer readable medium. The computer readable medium may include storage devices such as magnetic or optical disks, memory chips, or other storage devices suitable for interfacing with a suitable reader/general purpose computer. In such instances, the computer readable storage medium is non-transitory. Such storage medium also covers all computer-readable media e.g. medium that stores data only for short periods of time and/or only in the presence of power, such as register memory, processor cache and Random Access Memory (RAM) and the like. The computer readable medium may even include a wired medium such as exemplified in the Internet system, or wireless medium such as exemplified in Bluetooth technology. The computer readable medium may be, for example, cloud storage in the Internet or within an intranet. The computer program when loaded and executed on a suitable reader effectively results in an apparatus that can implement the steps of the described methods, e.g. in a physical embodiment. The computer readable medium is intended to be transferable and is reproducible in that the computer program if applicable is reproducible.

The exemplary embodiments may also be implemented as hardware modules. A module is a functional hardware unit designed for use with other components or modules. For example, a module may be implemented using digital or discrete electronic components, or it can form a portion of an entire electronic circuit such as an Application Specific Integrated Circuit (ASIC). A person skilled in the art will understand that the exemplary embodiments can also be implemented as a combination of hardware and software modules.

Additionally, when describing some embodiments, the disclosure may have disclosed a method and/or process as a particular sequence of steps. However, unless otherwise required, it will be appreciated that the method or process should not be limited to the particular sequence of steps disclosed. Other sequences of steps may be possible. The particular order of the steps disclosed herein should not be construed as undue limitations. Unless otherwise required, a method and/or process disclosed herein should not be limited to the steps being carried out in the order written. The sequence of steps may be varied and still remain within the scope of the disclosure.

Further, in the description herein, the word "substantially" whenever used is understood to include, but not restricted to, "entirely" or "completely" and the like. In addition, terms such as "comprising", "comprise", and the like whenever used, are intended to be non-restricting descriptive language in that they broadly include elements/components recited after such terms, in addition to other components not explicitly recited. For an example, when "comprising" is used, reference to a "one" feature is also intended to be a reference to "at least one" of that feature. Terms such as "consisting", "consist", and the like, may, in the appropriate context, be considered as a subset of terms such as "comprising", "comprise", and the like. Therefore, in embodiments disclosed herein using the terms such as "comprising", "comprise", and the like, it will be appreciated that these embodiments provide teaching for corresponding embodiments using terms such as "consisting", "consist", and the like. Further, terms such as "about", "approximately" and the like whenever used, typically means a reasonable variation, for example, but not limited to, a variation of +/- 5% of the disclosed value, or a variance of 4% around/of the disclosed value, or a variance of 3% around/of the disclosed value, a variance around/of 2% of the disclosed value or a variance around/of 1% of the disclosed value.

Furthermore, in the description herein, certain values may be disclosed in a range. The values showing the end points of a range are intended to illustrate a preferred range. Whenever a range has been described, it is intended that the range covers and teaches all possible sub-ranges as well as individual numerical values within that range. That is, the end points of a range should not be interpreted as inflexible limitations. For example, a description of a range of 1% to 5% is intended to have specifically disclosed sub-ranges 1% to 2%, 1% to 3%, 1% to 4%, 2% to 3% etc., as well as individually, values within that range such as 1%, 2%, 3%, 4% and 5%. It is to be appreciated that the individual numerical values within the range also include integers, fractions and decimals. Furthermore, whenever a range has been described, it is also intended that the range covers and teaches values of up to 2 additional decimal places or significant figures (where appropriate) from the shown numerical end points. For example, a description of a range of 1% to 5% is intended to have specifically disclosed the ranges 1.00% to 5.00% and also 1.0% to 5.0% and all their intermediate values (such as 1.01%, 1.02% ... 4.98%, 4.99%, 5.00% and 1.1%, 1.2% ... 4.8%, 4.9%, 5.0% etc.,) spanning the ranges. The intention of the above specific disclosure is applicable to any depth/breadth of a range.

In the described exemplary embodiments, the term "objects" is used to denote objects in a frame. Such objects may include a human or an inanimate object. Thus, references to objects other than humans may be taken to refer to inanimate objects.

In the described exemplary embodiments, the term "human" is used to denote the subject of the action recognition tasks. It will be appreciated that the exemplary embodiments may potentially be extended to other animate/living subjects. In such potential extensions, the term "human" may be understood to cover such other animate/living subjects.

In the described exemplary embodiments, it will be appreciated that more than one pass or iteration may be taken through the ORA module or the object-augmented action recognition system for an action recognition task. That is, the exemplary embodiments are not limited to a single pass.

In the described exemplary embodiments, it will be appreciated that the exemplary embodiments are not limited to VideoMAE implementation as described and may be extended to work with any other suitable vision transformer-based structures.

In the described exemplary embodiments, it will be appreciated that the ORA module and the object-augmented action recognition system may be pre-trained prior to deployment for any application.

It will be appreciated by a person skilled in the art that other variations and/or modifications may be made to the specific embodiments without departing from the scope of the claimed invention as broadly described. For example, in the description herein, features of different exemplary embodiments may be mixed, combined, interchanged, incorporated, adopted, modified, included etc. or the like across different exemplary embodiments. For example, exemplary embodiments are not necessarily mutually exclusive as some may be combined with one or more embodiments to form new exemplary embodiments. Furthermore, it will be appreciated that while the present disclosure provides embodiments having one or more of the features/characteristics discussed herein, one or more of these features/characteristics may also be disclaimed in other alternative embodiments and the present disclosure provides support for such disclaimers and these associated alternative embodiments. The present embodiments are, therefore, to be considered in all respects to be illustrative and not restrictive.

**Claims**

1. A computer-implemented method of object-augmented action recognition, the method comprising,

   obtaining one or more initial patch tokens from one or more video frames; processing the one or more initial patch tokens to extract one or more human tokens and one or more object tokens;
   applying the extracted one or more human tokens and the extracted one or more object tokens and the one or more initial patch tokens to a first cross attention mechanism to obtain a set of processed patch tokens containing object-guided information;
   enumerating the extracted one or more human tokens and the extracted one or more object tokens to construct a set of Human-Object (HO) tokens, the constructed HO tokens each comprising information associated with visual relationship and information associated with spatial relationship between a human token and an object token;
   applying the constructed HO tokens and the processed patch tokens containing object-guided information to a second cross attention mechanism to obtain a set of resultant processed HO tokens;
   applying a feature aggregation process to the resultant processed HO tokens to synthesize the features of M groups of the resultant processed HO tokens into a single feature representation;
   obtaining a prediction result based on the set of processed patch tokens containing object-guided information;
   obtaining an action recognition prediction result based on a result of the feature aggregation process and the prediction result based on the set of processed patch tokens containing object-guided information; and
   outputting for use the action recognition prediction result.

2. The computer-implemented method as claimed in claim 1, wherein the step of processing the one or more initial patch tokens to extract one or more human tokens and one or more object tokens comprises using object metadata information to extract the one or more human tokens and the one or more object tokens, the object metadata information based on applying bounding box coordinates and object categories from object annotation data to the one or more video frames.

3. The computer-implemented method as claimed in claims 1 or 2, wherein the step of processing the one or more initial patch tokens to extract one or more human tokens and one or more object tokens further comprises ordering the extracted one or more human tokens and the extracted one or more object tokens to place the one or more human tokens in front of the one or more object tokens.

4. The computer-implemented method as claimed in any one of claims 1 to 3, wherein the step of enumerating the extracted one or more human tokens and the extracted one or more object tokens to construct a set of HO tokens further comprises embedding information associated with visual relationship using a concatenation process and a positional encoding process.

5. The computer-implemented method as claimed in any one of claims 1 to 4, wherein the step of enumerating the extracted one or more human tokens and the extracted one or more object tokens to construct a set of HO tokens further comprises embedding information associated with spatial relationship using spatial embedding data and another concatenation process.

6. The computer-implemented method as claimed in any one of claims 1 to 5, wherein the step of applying a feature aggregation process comprises combining different resultant processed HO tokens into the M groups, wherein each group represents action-level features trained using action annotations; and
aggregating the resultant processed HO tokens using a weight applied for each resultant processed HO token.

7. The computer-implemented method as claimed in any one of claims 1 to 6, wherein the step of applying a feature aggregation process to the resultant processed HO tokens further comprises a selection of the most decisive resultant processed HO tokens for action recognition.

8. The computer-implemented method as claimed in any one of claims 1 to 7, wherein the step of outputting for use the action recognition prediction result comprises transmitting the action recognition prediction result to an action apparatus; and
causing the action apparatus to activate an action based on the action recognition prediction result.

9. An object-augmented action recognition system, the system comprising,

an input module to obtain one or more initial patch tokens from one or more video frames;
an Object-augmented Relation-aware Action recognition (ORA) module coupled to the input module, the ORA module comprising,

an Object-Guided Attention (OGA) module to process the one or more initial patch tokens to extract one or more human tokens and one or more object tokens, the OGA module further to apply the extracted one or more human tokens and the extracted one or more object tokens and the one or more initial patch tokens to a first cross attention mechanism to obtain a set of processed patch tokens containing object-guided information;
a Dynamic Interaction Attention (DIA) module coupled to the OGA module, the DIA module to enumerate the extracted one or more human tokens and the extracted one or more object tokens to construct a set of Human-Object (HO) tokens, the constructed HO tokens each comprising information associated with visual relationship and information associated with spatial relationship between a human token and an object token, the DIA module further to apply the constructed HO tokens and the processed patch tokens containing object-guided information to a second cross attention mechanism to obtain a set of resultant processed HO tokens;
a feature aggregation module to apply a feature aggregation process to the resultant processed HO tokens to synthesize the features of M groups of the resultant processed HO tokens into a single feature representation;
a classification head to obtain a prediction result based on the set of processed patch tokens containing object-guided information;
a prediction module to obtain an action recognition prediction result based on a result of the feature aggregation process and the prediction result based on the set of processed patch tokens containing object-guided information; and
the prediction module further to output for use the action recognition prediction result;

an action apparatus coupled to the ORA module, the action apparatus arranged to activate an action based on the action recognition prediction result.

10. The object-augmented action recognition system as claimed in claim 9, further comprising the OGA module further to use object metadata information to extract the one or more human tokens and the one or more object tokens, the object metadata information based on the OGA module arranged to apply bounding box coordinates and object categories from object annotation data to the one or more video frames.

11. The object-augmented action recognition system as claimed in claims 9 or 10, further comprising the OGA module further to order the extracted one or more human tokens and the extracted one or more object tokens to place the one or more human tokens in front of the one or more object tokens.

12. The object-augmented action recognition system as claimed in any one of claims 9 to 11, further comprising the DIA module to embed information associated with visual relationship using a concatenation process and a positional encoding process.

13. The object-augmented action recognition system as claimed in any one of claims 9 to 12, further comprising the DIA module to embed information associated with spatial relationship using spatial embedding data and another concatenation process.

14. The object-augmented action recognition system as claimed in any one of claims 9 to 13, further comprising the feature aggregation module to combine different resultant processed HO tokens into the M groups, wherein each group represents action-level features trained using action annotations; and to aggregate the resultant processed HO tokens using a weight applied for each resultant processed HO token.

15. The object-augmented action recognition system as claimed in any one of claims 9 to 14, further comprising the feature aggregation module to perform a selection of the most decisive resultant processed HO tokens for action recognition.

16. The object-augmented action recognition system as claimed in any one of claims 9 to 15, further comprising the prediction module to transmit the action recognition prediction result to the action apparatus; and to cause the action apparatus to activate the action based on the action recognition prediction result.

17. A non-transitory tangible computer readable storage medium having stored thereon software instructions that, when executed by a computer processor of an object-augmented action recognition system, cause the computer processor to perform a computer-implemented method of object-augmented action recognition, by executing the steps comprising,

obtaining one or more initial patch tokens from one or more video frames;
processing the one or more initial patch tokens to extract one or more human tokens and one or more object tokens;
applying the extracted one or more human tokens and the extracted one or more object tokens and the one or more initial patch tokens to a first cross attention mechanism to obtain a set of processed patch tokens containing object-guided information;
enumerating the extracted one or more human tokens and the extracted one or more object tokens to construct a set of Human-Object (HO) tokens, the constructed HO tokens each comprising information associated with visual relationship and information associated with spatial relationship between a human token and an object token;
applying the constructed HO tokens and the processed patch tokens containing object-guided information to a second cross attention mechanism to obtain a set of resultant processed HO tokens;
applying a feature aggregation process to the resultant processed HO tokens to synthesize the features of M groups of the resultant processed HO tokens into a single feature representation;
obtaining a prediction result based on the set of processed patch tokens containing object-guided information;
obtaining an action recognition prediction result based on a result of the feature aggregation process and the prediction result based on the set of processed patch tokens containing object-guided information; and

outputting for use the action recognition prediction result.

18. The non-transitory tangible computer readable storage medium as claimed in claim 17, wherein the computer-implemented method of object-augmented action recognition is as claimed in any one of claims 2 to 8.

FIG. 1

FIG. 2

EP 4 730 282 A1

FIG. 3

FIG. 4A

Output features

Positional
Encoding

Input

408

406

FIG. 4B

one or more initial patch tokens is obtained from one or more video frames

the one or more initial patch tokens is processed to extract one or more human tokens and one or more object tokens

the extracted one or more human tokens and the extracted one or more object tokens and the one or more initial patch tokens are applied to a first cross attention mechanism to obtain a set of processed patch tokens containing object-guided information

the extracted one or more human tokens and the extracted one or more object tokens are enumerated to construct a set of Human-Object (HO) tokens, the constructed HO tokens each comprising information associated with visual relationship and information associated with spatial relationship between a human token and an object token

the constructed HO tokens and the processed patch tokens containing object-guided information are applied to a second cross attention mechanism to obtain a set of resultant processed HO tokens

a feature aggregation process is applied to the resultant processed HO tokens to synthesize the features of M groups of the resultant processed HO tokens into a single feature representation

a prediction result is obtained based on the set of processed patch tokens containing object-guided information

an action recognition prediction result is obtained based on a result of the feature aggregation process and the prediction result based on the set of processed patch tokens containing object-guided information

the action recognition prediction result is output for use

502
504
506
508
510
512
514
516
518
500

FIG. 5

FIG. 6

**EUROPEAN SEARCH REPORT**

Application Number

EP 25 19 8971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Roy Debaditya ET AL: "Interaction Region Visual Transformer for Egocentric Action Anticipation", ArXiv, 11 January 2024 (2024-01-11), pages 1-20, XP093343421, Retrieved from the Internet: URL:https://arxiv.org/pdf/2211.14154 * page 3, paragraph 4 - page 8, paragraph 1; figures 1-4 * | 1-18 | INV. G06V40/10 G06V40/20 G06V10/422 G06V10/82 |
| | ----- | | |
| | | | **TECHNICAL FIELDS SEARCHED (IPC)** |
| | | | G06V |

The present search report has been drawn up for all claims

| Place of search | Date of completion of the search | Examiner |
|---|---|---|
| The Hague | 4 December 2025 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. MATERZYNSKA et al.** Something-else: Compositional action recognition with spatial-temporal interaction networks. *Proceedings of the IEEE/CVF conference on computer vision and pattern recognition*, 2020, 1049-1059
- **G. RADEVSKI et al.** Revisiting spatiotemporal layouts for compositional action recognition. *arXiv preprint arXiv:2111.01936*, 2021
- **R. HERZIG et al.** Object-region video transformers, in. *Proceedings of the ieee/cvf conference on computer vision and pattern recognition*, 2022, 3148-3159
- **C. ZHANG et al.** Is an object-centric video representation beneficial for transfer?. *Proceedings of the Asian Conference on Computer Vision*, 2022, 1976-1994
- **X. ZHOU et al.** How can objects help action recognition?. *Proceedings of the IEEE/CVF Conference on Computer Vision and Pattern Recognition*, 2023, 2353-2362
- **ELSAYED et al.** Savi++: Towards end-to-end object-centric learning from real-world videos. *Advances in Neural Information Processing Systems*, 2022, vol. 35, 28940-28954
- **F. LOCATELLO et al.** Object-centric learning with slot attention. *Advances in neural information processing systems*, 2020, vol. 33, 11525-11538
- **A. SHAMSIAN et al.** Learning object permanence from video. *Computer Vision-ECCV 2020: 16th European Conference, Glasgow, UK*, 23 August 2020
- Proceedings, Part XVI. Springer, 2020, vol. 16, 35-50
- **C.-Y. WU et al.** Towards long-form video understanding. *Proceedings of the IEEE/CVF Conference on Computer Vision and Pattern Recognition*, 2021, 1884-1894
- **X. WANG et al.** Videos as space-time region graphs. *Proceedings of the European conference on computer vision (ECCV)*, 2018, 399-417
- **T.-Y. LIN et al.** Microsoft coco: Common objects in context. *Computer Vision-ECCV 2014: 13th European Conference, Zurich, Switzerland*, 06 September 2014
- Proceedings, Part V. Springer, 2014, vol. 13, 740-755

- **Y.-W. CHAO et al.** Hico: A benchmark for recognizing human-object interactions in images. *Proceedings of the IEEE international conference on computer vision*, 2015, 1017-1025
- **S. QI et al.** Learning human-object interactions by graph parsing neural networks. *Proceedings of the European conference on computer vision (ECCV)*, 2018, 401-417
- **K. HE et al.** Deep residual learning for image recognition. *Proceedings of the IEEE conference on computer vision and pattern recognition*, 2016, 770-778
- **J. DAI et al.** Deformable convolutional networks. *Proceedings of the IEEE international conference on computer vision*, 2017, 764-773
- **F. Z. ZHANG et al.** Exploring predicate visual context in detecting of human-object interactions. *Proceedings of the IEEE/CVF International Conference on Computer Vision*, 2023, 10411-10421
- **Y. LIAO et al.** Gen-vlkt: Simplify association and enhance interaction understanding for hoi detection. *Proceedings of the IEEE/CVF Conference on Computer Vision and Pattern Recognition*, 2022, 20123-20132
- **A. RADFORD et al.** Learning transferable visual models from natural language supervision, in: International conference on machine learning. *PMLR*, 2021, 8748-8763
- **J. PARK et al.** Viplo: Vision transformer based poseconditioned self-loop graph for human-object interaction detection. *Proceedings of the IEEE/CVF Conference on Computer Vision and Pattern Recognition*, 2023, 17152-17162
- **Z. TONG et al.** Videomae: Masked autoencoders are data-efficient learners for self-supervised video pre-training. *Advances in neural information processing systems*, 2022, vol. 35, 10078-10093
- **K. HE et al.** Mask r-cnn. *Proceedings of the IEEE international conference on computer vision*, 2017, 2961-2969
- **M. MARTIN et al.** Drive&act: A multi-modal dataset for fine-grained driver behavior recognition in autonomous vehicles. *Proceedings of the IEEE/CVF International Conference on Computer Vision*, 2019, 2801-2810
- **S. XU et al.** Pp-yoloe: An evolved version of yolo. *arXiv preprint arXiv:2203.16250*, 2022

- **R. HERZIG et al.** Object-region video transformers. *Proceedings of the ieee/cvf conference on computer vision and pattern recognition*, 2022, 3148-3159

- **D. LIN et al.** Multi-modality action recognition based on dual feature shift in vehicle cabin monitoring. *arXiv preprint arXiv:2401.14838*, 2024